# EUROPEAN PATENT SPECIFICATION

(11) **EP 2 512 054 B1**
(45) Date of publication and mention of the grant of the patent: **16.02.2022**
(21) Application number: 11194425.2
(22) Date of filing: 20.12.2011
(51) Int. Cl.: H04L 1/00

(54) **System and method for multi-carrier multiplexing**
System und Verfahren für das Mehrträger-Multiplexing
Système et procédé de multiplexage multiporteur

(30) Priority: 14.04.2011 US 201113086702; 12.12.2011 US 201113323467
(43) Date of publication of application: 17.10.2012
(73) Proprietor: Hughes Network Systems, LLC, Germantown, MD 20876 (US)
(72) Inventor: Antia, Yezdi, North Potomac, MD Maryland 20878 (US); Roos, Dave, Boyds, MD Maryland 20841 (US); Becker, Neal, Frederick, MD Maryland 21702 (US)
(74) Representative: Körfer, Thomas

(56) References cited:
- US-A1- 2001 043 751
- US-A1- 2007 268 979
- US-A1- 2008 291 860
- US-B1- 6 212 176

## Description

### RELATED APPLICATIONS

This application claims the priorities of U.S. Patent Application Serial No. 13/086,702, filed April 14, 2011 and of U.S. Patent Application Serial No. 13/323,467, filed on December 12, 2011, titled System and Method for Multi-Carrier Multiplexing.

### BACKGROUND

Transportation of higher throughput advanced services via a satellite transponder has been an engineering design constraint for decades. The transmission system and receiver system are the main two areas of a satellite broadcast system. High capacity data services over satellite are among the primary technology challenges facing the industry and satellite system operators today. Digital video broadcast - satellite second generation (DVB-S2) is an enhanced specification for satellite digital television broadcast developed in 2003 and ratified in March 2005. The DVB-S2 standard is as follows: Digital Video Broadcasting (DVB), Second Generation Framing Structure, Channel Coding and Modulation Systems for Broadcasting, Interactive Services, News Gathering and other Broadband Satellite Applications, DVB-S2 Standard ETSI EN 302 307 v1.2.1 (2009-08)(hereinafter referred to as the "DVB-S2 Standard"). Using the traditional mechanism over the standard DVB-S2, while supporting high bandwidth and interactive services, however, requires significantly higher performance satellite transponders to support data rates.

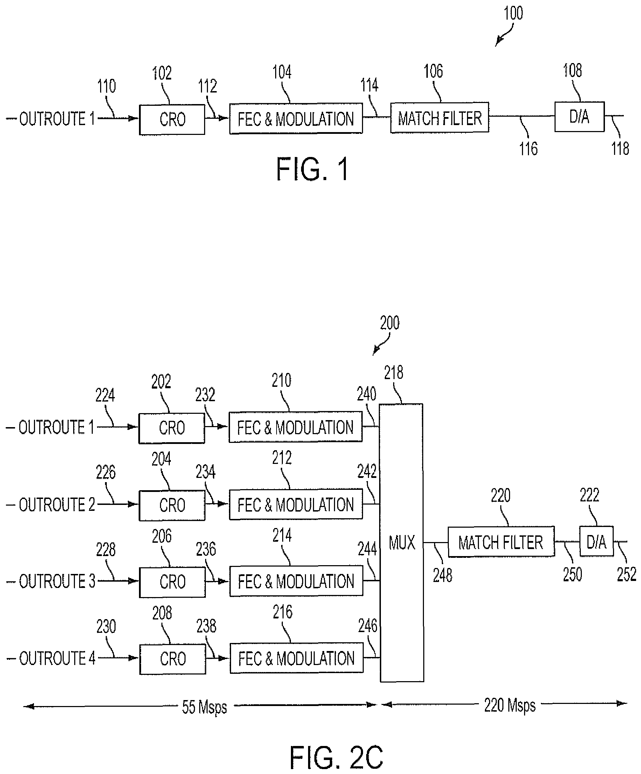

**FIG. 1** illustrates an example conventional transmitter. As illustrated in the figure, a transmitter **100** includes a code rate organizer (CRO) **102,** a modulator **104,** a match filter **106** and a digital-to-analog converter (DAC) **108.** CRO **102** may be arranged to receive an outroute stream signal **110** and output a signal **112.** Modulator **104** may be arranged to receive signal **112** and output a modulated signal **114.** Match filter **106** may be arranged to receive modulated signal **114** and output a transmit signal **116.** DAC **108** may be arranged to receive transmit signal **116** and output an analog signal **118.** CRO **102** may determine the modulation and coding to be performed for outroute stream signal **110** in order to generate output signal **112.** CRO **102** may perform coding for information to be communicated to remote receivers (not shown) as addressed by outroute stream signal **110.** Modulator **104** may encode received signal **112** and output modulated signal **114.** Modulator **104** may code a digital data input payload for ensuring a receive terminal can decode and perform error correction for errors occurring in a received payload. Match filter **106** may perform filtering in order to maximize the signal-to-noise ratio of a signal in the presence of an additive noise. DAC **108** may convert digital modulated transmit signal **116** to analog signal **118.** In operation, CRO **102** may receive and perform coding for received signal outroute stream signal **110.** Modulator **104** may receive signal **112** and perform forward error correction and modulation. Match filter **106** may receive signal which has been coded, forward error corrected and modulated and perform filtering on the received signal in order to maximize the signal-to-noise ratio of the signal in the presence of additive noise. Finally, DAC **108** may convert the coded, forward error corrected, modulated and filtered signal into an analog continuous waveforms for transmission.

In a conventional satellite system, data streams may be coded, modulated and broadcast to a multiplicity of mobile terminals. A typical conventional transmitter can receive a signal with up to 45 million symbols per second (Msps). However, in order to meet the demand for today's high definition and advanced services, terminals may be required to support significantly more than the 45 Msps. To achieve high data rates, for example up to 220 Msps, needed by the satellite communications industry using conventional techniques would require expensive equipment with significantly high power consumption.

A communication system in which information is transmitted in successive time slots grouped into a plurality of superframes which are, in turn, grouped into a plurality of hyperframes is known from US 6,212,176 B1. Each superframe includes a plurality of time slots. These timeslots are comprising a logical channel for broadcast control information and time slots comprising a logical paging channel, the assigned time slot being included in the time slots comprising the logical paging channel. Information sent in the assigned time slot may include information directing the remote terminal to read the broadcast control information. The broadcast control information comprises special messages that are included in respective time slots comprising a logical special message channel. The time slots of the special message channel are grouped in successive SMS frames, and the SMS frames are synchronized to start with a start of a superframe. A transition flag is provided to each SMS subchannel. The assigned time slot is decoded in the remote station only in first superframes, in successive hyperframes if the assigned time slot is properly decoded.

The object of the present invention is therefore to provide a system and method to address the challenges of transmitting and receiving high quality video, advanced services, and other data services via satellite, at enhanced data rates, in a cost effective and efficient manner, for example, adhering to power consumption constraints, improving efficiency (e.g., with respect to signal synchronization and a data acquisition processes), facilitating dynamic and flexible bandwidth allocation planning, utilizing relatively low complexity and reduced cost terminal equipment, and remaining compliant with the DVB-S2 Standard.

### SOME EXEMPLARY EMBODIMENTS

The present invention advantageously addresses the needs above, as well as other needs, by providing a dynamic and flexible multiplexing scheme to allow terminals of a communications system to operate on wideband signals without requiring the decoder to operate at full speed, and under multiclass terminal operation.

Accordingly, the drawings and description are to be regarded as illustrative in nature, and not as restrictive. The invention is carried out in accordance with the appended claims.

### BRIEF DESCRIPTION OF THE DRAWINGS

The present invention is illustrated by way of example, and not by way of limitation, in the figures of the accompanying drawings and in which like reference numerals refer to similar elements and in which:
**FIG. 1** illustrates a block diagram of an example conventional transmitter;
**FIGs. 2A and 2B** illustrate communications systems capable of employing a dynamic and flexible multiplexing scheme in accordance with various exemplary embodiments;
**FIG. 2C** illustrates a block diagram of a transmitter implementing a TDM multiplexing scheme. in accordance with an exemplary embodiment;
**FIG. 3** illustrates an example TDM stream output from the multiplexer of **Fig. 2C****,** multiplexed on a symbol basis, in accordance with an exemplary embodiment;
**FIG. 4** illustrates an example TDM stream output from the multiplexer of **Fig. 2C****,** multiplexed on a codeblock basis, in accordance with an exemplary embodiment;
**FIG. 5** illustrates a block diagram of a receiver that demultiplexes a data stream at an enhanced data rate, and partially demodulates and decodes the data stream at a lower data rate, in accordance with an exemplary embodiment;
**FIG. 6** illustrates a block diagram of a receiver that demodulates and demultiplexes a data stream at an enhanced data rate, and decodes the data stream at a lower data rate, in accordance with an exemplary embodiment;
**FIG. 7** illustrates an example code division multiplexed codeblock, in accordance with an exemplary embodiment;
**FIG. 8** illustrates a block diagram of a transmitter implementing a CDM multiplexing scheme, in accordance with an exemplary embodiment;
**FIG. 9** illustrates a block diagram of a receiver for receiving a CDM multiplexed data stream, in accordance with an exemplary embodiment;
**FIG. 10** illustrates an example codeblock frame, in accordance with an exemplary embodiment;
**FIG. 11** illustrates the baseband header fields of a DVB-S2 codeblock, in accordance with an exemplary embodiment;
**FIG. 12** illustrates an example timeplan, in accordance with an exemplary embodiment;
**FIG. 13** illustrates a flow chart of a method for acquisition of a timeplan in a multiplexing scheme employed with a continuous GSE protocol, in accordance with an exemplary embodiment;
**FIG. 14** illustrates a flow chart of a method for acquisition of a timeplan in a multiplexing scheme employed with a continuous GSE protocol, in accordance with further an exemplary embodiment;
**FIG. 15** illustrates an example method of new timeplan activation or a timeplan update, in accordance with further an exemplary embodiment; and
**FIG. 16** illustrates the signaling within a codeblock baseband header, for a multiplexing scheme employed with a continuous GSE protocol, in accordance with an exemplary embodiment;
**FIG. 17** illustrates an example of a counter for tracking codeblocks of a multiplexing scheme, in accordance with an exemplary embodiment;
**FIG. 18** illustrates the signaling within a codeblock baseband header, for a multiplexing scheme employed with a packetized MPE or packetized GSE protocol, in accordance with an exemplary embodiment;
**FIG. 19** illustrates an example of the signaling, for a multiplexing scheme employed with a packetized MPE or packetized GSE protocol, where the SID is explicitly coded and the SSN is implicitly coded within the header of a codeblock, in accordance with an exemplary embodiment;
**FIG. 20** illustrates a flow chart of a method for acquisition of a timeplan in a multiplexing scheme employed with a packetized MPE or packetized GSE protocol, in accordance with an exemplary embodiment;
**FIG. 21** illustrates a flow chart of a method for acquisition of a timeplan in a multiplexing scheme employed with a packetized MPE or packetized GSE protocol, in accordance with a further exemplary embodiment;
**FIG. 22** illustrates an example of the signaling, for a multiplexing scheme employed with a packetized MPE or packetized GSE protocol, where the SID is explicitly coded, the SSN is implicitly coded and an SSN indicator is coded within the header of a codeblock, in accordance with an exemplary embodiment;
**FIG. 23** illustrates an example of the signaling, for a multiplexing scheme employed with a continuous GSE protocol, where the SID is explicitly coded, the SSN is implicitly coded and an SSN indicator is coded within the header of a codeblock, in accordance with an exemplary embodiment;
**FIG. 24** illustrates an arrangement of a plurality of superframes, in accordance with further an exemplary embodiment.

### DETAILED DESCRIPTION

In accordance with an aspect of the present invention, a dynamic and flexible multiplexing scheme to allow terminals of a communications system to operate on wideband signals without requiring the decoder to operate at full speed, and under multiclass terminal operation, is provided. A plurality of outroute data streams may be multiplexed at the transmitter side, thereby achieving multiple times greater data capacity than existing transmitters. Similarly, a received multiplexed data stream may be demultiplexed at the receiver side in order to achieve greater data capacity.

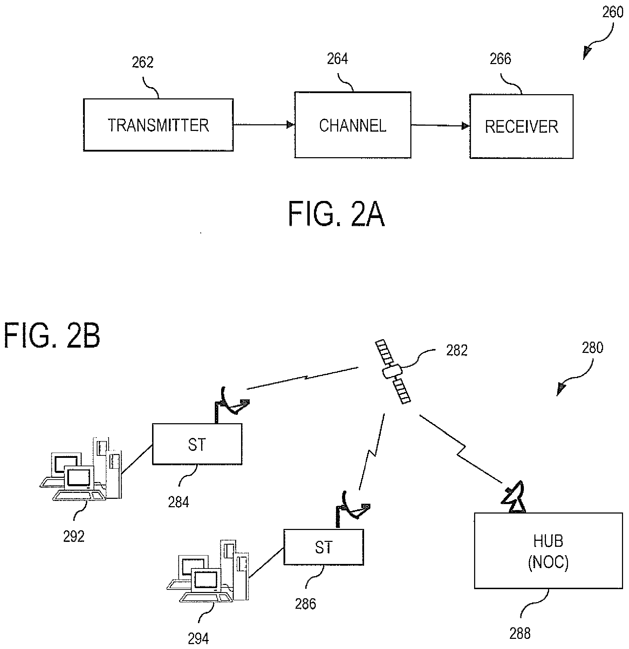

**FIGs. 2A** and **2B** illustrate communications systems capable of employing a dynamic and flexible multiplexing scheme according to various exemplary embodiments of the present invention. With reference to **FIG. 2A****,** a digital communications system **260** includes one or more transmitters **262** (of which one is shown) that generate signal waveforms across a communication channel **264** to one or more receivers **266** (of which one is shown). In this discrete communications system **260,** the transmitter **262** has a signal source that produces a discrete set of data signals, where each of the data signals has a corresponding signal waveform. These signal waveforms are attenuated, or otherwise altered, by communications channel **264.** To combat noise and other issues associated with the channel **264,** coding may be utilized. For example, forward error correction (FEC) codes can be employed.

**FIG. 2B** illustrates an exemplary satellite communications system **280** capable of supporting communication among terminals with varied capabilities, according to an embodiment of the present invention. Satellite communications system **280** includes a satellite **262** that supports communication among multiple satellite terminals (STs) **284, 286** and a hub **288.** The HUB **288** may assume the role of a Network Operations Center (NOC), which controls the access of the STs **284, 286** to the system **280** and also provides element management functions and control of the address resolution and resource management functionality. The Satellite communications system **280** may operate as a traditional bent-pipe system, where the satellite essentially operates as a repeater. Alternatively, the system **280** may employ a switching or processing satellite supporting mesh communications (point-to-point communications directly between, for example, the two STs **284, 286).**

In a traditional bent-pipe system of an exemplary embodiment, the satellite **262** operates as a repeater or bent pipe, and communications between the STs **284, 286** are transmitted over a double-hop path. For example, in a communication from ST **284** to ST **286,** over the first hop, the communication is transmitted, via the satellite, from the ST **284** to the HUB **288.** The HUB **288** decodes the communication and determines the destination ST **286.** The HUB **288** then appropriately addresses and repackages the communication, encodes and modulates it, and transmits the communication over the second hop, via the satellite, to the destination ST **286.** Accordingly, the satellite of such a system acts as a bent pipe or repeater, transmitting communications between the HUB **288** and the STs **284, 286.**

In an alternate embodiment, with a communications system **280** that employs a processing satellite (e.g., including a packet switch operating, for example, at a data link layer), the system may support direct unicast (point-to-point) communications and multicast communications among the STs **284, 286.** In the case of a processing satellite, the satellite **262** decodes the received signal and determines the destination ST or STs (as the hub **288** would in a bent-pipe system). The satellite **262** then addresses the data accordingly, encodes and modulates it, and transmits the modulated signal, over the channel 113, to the destination ST or STs (e.g., ST **286)** The STs **284, 286** provide connectivity to one or more hosts **292, 294,** respectively. According to one embodiment of the present invention, the system **280** has a fully meshed architecture, whereby the STs **284, 286** may directly communicate.

In an example embodiment, a transmitter has a four outroute streams, multiplexed into one 220 Msps outroute stream. The outroute streams may be multiplexed with either a Time Division Multiplexing (TDM) scheme or a Code Division Multiplexing (CDM) scheme, that can be sent over the satellite system. Before being multiplexed, each outroute stream may be coded with a relatively low rates, for example 55 Msps.

**FIG. 2C** illustrates an example transmitter, in accordance with an aspect of the present invention. A transmitter **200** includes a CRO **202,** a CRO **204,** a CRO **206,** a CRO **208,** a modulator **210,** a modulator **212,** a modulator **214,** a modulator **216,** a multiplexer **218,** a match filter **220** and a DAC **222.** CRO **202** may be arranged to receive an outroute stream signal **224** and output a signal **232.** Modulator **210** may be arranged to output a modulated signal **240** based on signal **232.** In some embodiments, modulator **210** is arranged to receive signal **232** directly from CRO **202.** Similarly, CRO **204** may be arranged to receive an outroute stream signal **226** and output a signal **234.** Modulator **212** may be arranged to output a modulated signal **242** based on signal **234.** In some embodiments, modulator **212** is arranged to receive signal **234** directly from CRO **204.** CRO **206** may be arranged to receive an outroute stream signal **228** and output a signal **236.** Modulator **214** may be arranged to output a modulated signal **244** based on signal **236.** In some embodiments, modulator **214** is arranged to receive signal **236** directly from CRO **206.** CRO **208** may be arranged to receive an outroute stream signal **230** and output a signal **238.** Modulator **216** may be arranged to output a modulated signal **246** based on signal **238.** In some embodiments, modulator **216** is arranged to receive signal **238** directly from CRO **208.** Multiplexer **218** may be arranged to output a multiplexed signal **248** based on modulated signals **240, 242, 244** and **246.** In some embodiments, multiplexer **218** is arranged to receive modulated signals **240, 242, 244** and **246** directly from modulator **210,** modulator **212,** modulator **214** and modulator **216,** respectively. Match filter **220** may be arranged to output a filtered signal **250** based on multiplexed signal **248.** Non-limiting examples of modulation types supported by filtered signal 250 include TDM and CDM. In some embodiments, match filter **220** is arranged to receive multiplexed signal **248** directly from multiplexer **218.** A match filter, on the transmitter side, is used to limit the bandwidth and reduce adjacent channel interference. On a corresponding receiver side (not shown), a match filter is used as an optimal linear filter for maximizing the signal to noise ratio in the presence of noise. DAC **222** may be arranged to output an analog signal **252** based on filtered signal **250.** In some embodiments, DAC **222 is** arranged to receive filtered signal **250** directly from match filter **220.**

CRO **202,** CRO **204,** CRO **206** and CRO **208** may perform modulation and coding of outroute stream signals **224, 226, 228** and **230,** respectively, and output coded signals **232, 234, 236** and **238,** respectively, in a manner similar to CRO **102** of **FIG. 1****.** Modulators **210, 212, 214** and **216,** receive and encode and bit-to-symbol map coded signals **232, 234, 236** and **238,** respectively, and output modulated signals **240, 242, 244** and **246,** respectively, in a manner similar to modulator **104** of **FIG. 1****.** Multiplexer **218** multiplexes modulated signals **240, 242, 244** and **246** into one outroute stream as denoted by multiplexed signal **248.** By multiplexing modulated signals **240, 242, 244** and **246** into one outroute stream, transmitter **200** is able to utilize a single device or resource, in this case DAC **222,** to transmit a plurality of signals. Match filter **220** may filter multiplexed signal **248** in order to maximize the signal-to-noise ratio of the transmitted signal, in a similar manner as discussed above with reference to match filter **106** of **FIG. 1****.** DAC **222** may convert transmit filtered signal **250** to analog signal **252.** Each pair of CRO **202** and modulator **210,** CRO **204** and modulator **212,** CRO **206** and modulator **214,** and CRO **208** and modulator **216** may operate in a similar manner as the pair of CRO **102** and modulator **104** as discussed above with reference to **FIG. 1****.** For purposes of discussion, presume that each pair of CRO **202** and modulator **210,** CRO **204** and modulator **212,** CRO **206** and modulator **214,** and CRO **208** and modulator **216** may operate at a rate of 55 Msps, similar to the conventional transmitter discussed above with reference to **FIG. 1****.**

In contrast with the conventional system discussed above with reference to FIG. 1, in accordance with an aspect of the present invention, multiplexer **218** may operate at a much higher rate. For purposes of explanation, presume that in this example embodiment, multiplexer **218,** match filter **220** and DAC **222** may operate at a rate of 220 Msps. The **220** Msps performance of multiplexed signal **248** represents the aggregation of four 55 Msps as denoted by modulated signal **240, 242, 244** and **246.** Multiplexed signal **248** may then be processed via match filter **220** to generate transmit filtered signal **250.** Match filter **220** may operate in a similar manner as match filter **106** as discussed with reference to **FIG. 1****,** however at a significantly increased rate of operation. DAC **222** may convert transmit filtered signal **250** into analog which may then transmitted as analog signal **252.** DAC **222** may operate in a similar manner as DAC **108** as discussed above with reference to **FIG. 1****,** however at a significantly higher rate of operation.

In accordance with a multiplexed arrangement of the present invention, a plurality of outroute streams may be modulated, each at a conventional rate. Then the plurality of modulated outroute streams may be multiplexed together, filtered and converted into analog signals at a much higher rate. Accordingly, the overall data throughput provided by a transmitter in accordance with the present invention is much greater than that of a conventional transmitter as a result of aggregating multiple conventional information streams into an aggregate information stream performing at a significantly higher rate of operation.

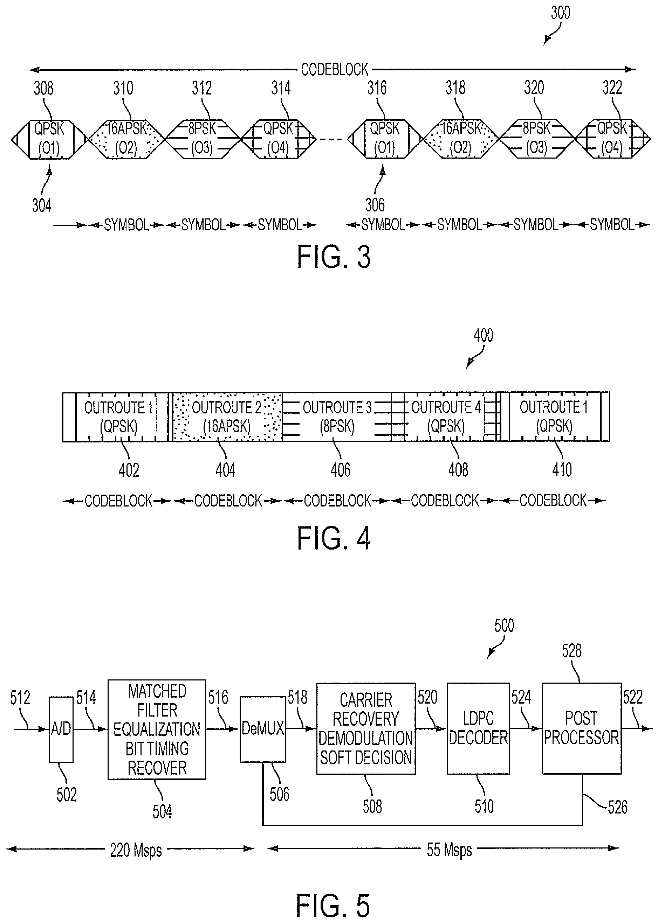

**FIG. 3** illustrates an example TDM stream **300** output from the multiplexer **218,** in accordance with an aspect of the present invention, where the outroute streams **224, 226, 228** and **230** are multiplexed on a symbol level. As illustrated in the figure, the codeblock stream **300** includes a sub-stream **304,** a plurality of additional portions illustrated with a series of dots, and a sub-stream **306.** Sub-stream **304** includes a symbol **308,** a symbol **310,** a symbol **312** and a symbol **314.** Sub-stream **306** includes a symbol **316,** a symbol **318,** a symbol **320** and a symbol **322.** In this example, presume that symbol **308** corresponds to a first symbol, and symbol **316** corresponds to a last symbol, of a codeblock of outroute sub-stream signal **224** of **FIG. 2C****,** and have been modulated with a QPSK modulation scheme. In this example, presume that symbol **310** corresponds to a first symbol, and symbol **318** corresponds to a last symbol, of a codeblock of outroute sub-stream signal **226,** and have been modulated with a 16APSK modulation scheme. In this example, presume that symbol **312** corresponds to a first symbol, and symbol **320** corresponds to a last symbol, of a codeblock of outroute sub-stream signal **228,** and have been modulated with an 8PSK modulation scheme. In this example, presume that symbol **314** corresponds to a first symbol, and symbol **322** corresponds to a last symbol, of a codeblock of outroute sub-stream signal **230,** and have been modulated with a QPSK modulation scheme.

In operation, multiplexer **218** first receives a symbol of modulated signal **240** as symbol **308,** a symbol of modulated signal **242** as symbol **310,** a symbol of modulated signal **244** as symbol **312,** and a symbol of modulated signal **246** as symbol **314.** Where symbols **308, 310, 312** and **314** represent the first symbols of a codeblock of modulated signals **240, 242, 244** and **246,** respectively. Multiplexer **218** continues to receive modulated signals **240, 242, 244** and **246** until codeblock **300** is completely transmitted, ending with the receipt of symbols **316, 318, 320** and **322,** corresponding to the last symbols of the codeblock of modulated signals **240, 242, 244** and **246,** respectively. In other words, as illustrated in **Fig. 3****,** codeblock **300** reflects a multiplexed stream, on a symbol level, of respective codeblocks of the outroute signals **224, 226, 228** and **230.**

**FIG. 4** illustrates an example TDM stream **400** output from the multiplexer **218,** in accordance with an aspect of the present invention, where the outroute streams **224, 226, 228** and **230** are multiplexed on a codeblock level. As illustrated in **FIG. 4****,** TDM codeblock data stream **400** includes an outroute codeblock **402,** an outroute codeblock **404,** an outroute codeblock **406,** an outroute codeblock **408** and an outroute codeblock **410,** where each of the outroute codeblocks **402, 404, 406, 408** and **410** reflects a whole codeblock of the outroutes **224, 226, 228, 230** and **224,** respectively (e.g., an entire DVB-S2 codeblock or frame, including the respective headers). Outroute codeblocks **402** and **410** are denoted as having been modulated via QPSK. Outroute codeblock **404** is denoted as having been modulated via 16APSK. Outroute codeblock **406** is denoted as having been modulated via 8APSK. Outroute codeblock **408** is denoted as having been modulated via QPSK. It should be noted that an output stream may have a plurality of codeblocks that have been modulated with different types of modulation schemes. For example, although in this example, outroute codeblocks **402** and **410** are each in outroute stream 1 and are denoted as having been modulated via QPSK, in other examples, outroute stream 1 may have outroute codeblocks that have been modulated via other modulation schemes. Accordingly, as illustrated in **Fig. 4****,** TDM stream **400** reflects a multiplexed stream, on a codeblock level, of respective codeblocks of the outroute signals **224, 226, 228** and **230,** and then beginning again with a next codeblock of outroute stream **224.**

In order to reduce complexity, cost and power consumption, a receiver may perform selective reception. For purposes of discussion, presume that four receivers are arranged to receive a signal transmitted from transmitter **200.** For example, a first receiver may receive and reassemble the QPSK codeblock of outroute stream signal **224** of **FIG. 2C****,** which correspond to a sampling denoted by example outroute codeblocks **402** and **410** of **FIG. 4****.** The first receiver may ignore the other codeblocks that do not correspond to outroute stream signal **224,** for example a sampling denoted by example outroute codeblocks **404, 406** and **408.** Similarly, a second receiver may receive and reassemble the 16APSK codeblock of outroute stream signal **226** of **FIG. 2C****,** which correspond to a sampling denoted by example outroute codeblock **404** of **FIG. 4****.** The second receiver may ignore the other codeblocks that do not correspond to outroute stream signal **226,** for example a sampling denoted by example outroute codeblocks **402, 406, 408** and **410.** Further, a third receiver may receive and reassemble the 8PSK codeblock of outroute stream signal **228** of **FIG. 2C****,** which correspond to a sampling denoted by example outroute codeblock **406** of **FIG. 4****.** The third receiver may ignore the other codeblocks that do not correspond to outroute stream signal **228,** for example a sampling denoted by example outroute codeblocks **402, 404, 408** and **410.** Finally, a fourth receiver may receive and reassemble the QPSK codeblock of outroute stream signal **230** of **FIG. 2C****,** which correspond to a sampling denoted by example outroute codeblock **408** of **FIG. 4****.** The fourth receiver may ignore the other codeblocks that do not correspond to outroute stream signal **230,** for example a sampling denoted by example outroute codeblocks **402, 404, 406** and **410.**

Again, in accordance with an aspect of the present invention, a single transmitter is operable to transmit a single data stream that includes a plurality of outroute codeblocks that have been multiplexed together. A single receiver will be able to receive the entire single data stream. For efficient processing, the receiver will only process a portion of the entire received single data stream. This aspect of the present invention will now be described with reference to **FIG. 5****.**

**FIG. 5** illustrates an example receiver, in accordance with an aspect of the present invention. A receiver **500** includes an analog-to-digital converter (ADC) **502,** a match filter equalizer **504,** a de-multiplexer **506,** a demodulator **508,** a low density parity check (LDPC) decoder **510** and a post processor **528.** ADC **502** may be arranged to receive an analog signal **512** from transmitter **200** and to output a digital signal **514.** Match filter equalizer **504** may be arranged to output a digital signal **516** based on digital signal **514.** In some embodiments, match filter equalizer **504** is arranged to receive digital signal **514** directly from ADC **502.** De-multiplexer **506** may be arranged to output a de-multiplexed signal stream **518** based on digital signal **516** and a data signal **526.** In some embodiments, de-multiplexer **506** is arranged to receive digital signal **516** directly from match filter equalizer **504.** In some embodiments, de-multiplexer **506** is arranged to receive data signal **526** directly from post processor **528.** Demodulator **508** may be arranged to output a demodulated signal **520** based on de-multiplexed signal stream **518.** In some embodiments, demodulator **508** is arranged to receive de-multiplexed signal stream **518** directly from de-multiplexer **506.** LDPC decoder **510** may be arranged to output a decoded signal **524** based on demodulated signal **520.** In some embodiments, LDPC decoder **510** is arranged to receive demodulated signal **520** directly from demodulator **508.** Post processor **528** may be arranged to output a data signal **522** and data signal **526,** each based on decoded signal **524.** In an example embodiment, post processor **528** is arranged to receive decoded signal **524** directly from LDPC decoder **510.**

ADC **502** converts received analog signals transmitted from an analog format to a digital format. Match filter equalizer **504** performs matched filtering of digital signal **514** in order to maximize the signal-to-noise ratio of the received signal. Furthermore, match filter equalizer **504** may perform recovery of bit timing. De-multiplexer **506** may select the portions of the received signal for processing. Demodulator **508** performs demodulation of the symbols selected by de-multiplexer **506** to form a reassembled codeblock. LDPC decoder **510** may decode of the received signal. Post processor **528** may provide timeplan information to de-multiplexer **506** such that de-multiplexer **506** may select the correct codeblocks for delivery to demodulator **508.** The timeplan information will be described in greater detail below.

In operation, receiver **500** receives analog signal **512.** After ADC **502** converts analog signal **512** to digital signal **514,** match filter equalizer **504** filters digital signal **514** to maximize the signal-to-noise ratio and thus improve signal quality. Match filter equalizer **504** may also operate to perform bit timing recovery in order to determine the starting and ending times for received symbols. De-multiplexer **506** then selects the portions of digital signal **516** for processing. For example, as described with reference to **FIG. 3** and **FIG. 4****,** de-multiplexer **506** may select to pass symbol **308** and symbol **316** via digital signal **516** and reject other symbols. Demodulator **508** performs demodulation of the symbols selected by de-multiplexer **506** to form a reassembled codeblock. For example, as described with reference to **FIG. 3** and **FIG. 4****,** a multiplicity of symbols with a sampling denoted as symbol **308** and symbol **316** may be reassembled to form the codeblock denoted as outroute codeblock **402.** De-multiplexed signal stream may then be processed into original streams delivered to LDPC decoder **510** for decoding. LDPC codes may be defined as Low Density Parity Codes and having an easily parallelizable decoding algorithm, performing simple arithmetic operations suitable for iterative decoding. Post processor **528** may receive the digitized, filtered, de-multiplexed, demodulated, reassembled and decoded signal for error detection and timeplan management.

As will be described in more detail below, analog signal **512** will include a timeplan indicating which codeblocks receiver **500** should decode. Post processor **528** will use this information to instruct de-multiplexer **506** as to which portions of digital signal **516** to pass for processing. In order to reduce complexity, cost and power consumption, receiver **500** may perform selective reception. For purposes of discussion, presume that receiver **500** is intended to receive and reassemble the 16APSK symbols of outroute stream signal **226** of **FIG. 2C****,** which correspond to a sampling denoted by example outroute codeblock **404** of **FIG. 4****.** Receiver **500** may ignore the other symbols that do not correspond to outroute stream signal **226,** for example a sampling denoted by example outroute codeblocks **402, 406, 408** and **410.**

In accordance with a multiplexed arrangement of the present invention, a single received stream that includes a plurality of outroute streams may be demultiplexed at a very high rate. Then the single batch of codeblocks selected by the multiplexer may be demodulated, decoded and processed at a much lower rate. Accordingly, the overall data processed by a receiver in accordance with the present invention may be similar to that of a conventional transmitter even though the received signal is received at a significantly higher rate. In other words, in accordance with an aspect of the present invention, a single transmitter is operable to transmit a single data stream that includes a plurality of outroute codeblocks that have been multiplexed together. Receiver **500** will be able to receive the entire single data stream. For efficient processing, receiver **500** will only process a portion of the entire received single data stream.

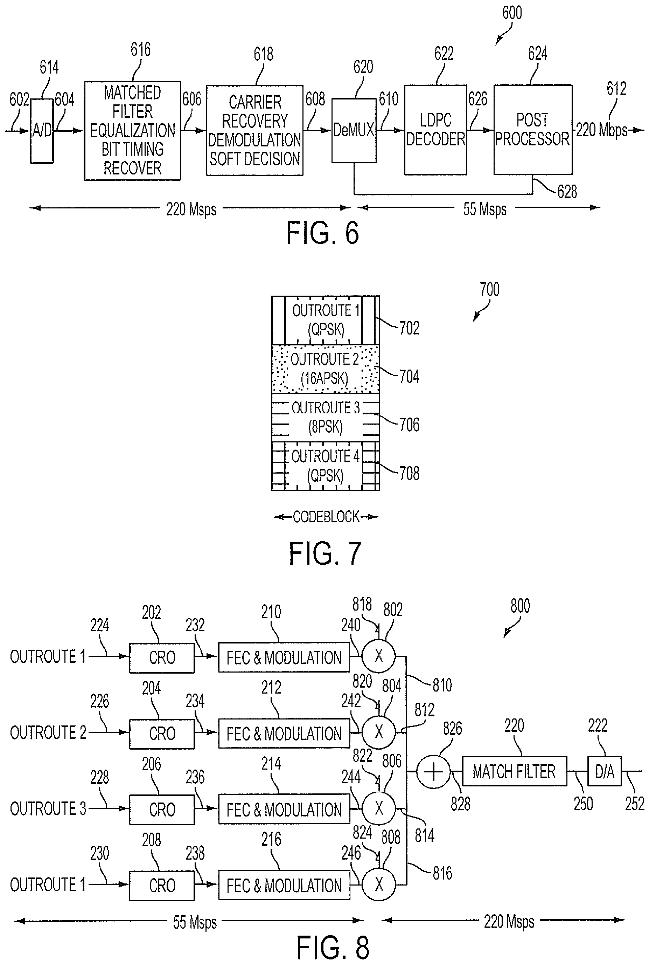

In the example embodiment discussed above with reference to **FIG. 5****,** a received signal is de-multiplexed and is then demodulated. However, in other embodiments, a received signal may first be demodulated and then de-multiplexed. This will now be described in greater detail below with reference to **FIG. 6****.**

**FIG. 6** illustrates an example receiver with carrier recovery performed prior to the de- multiplexer in accordance with an aspect of the present invention. As illustrated in the figures, a receiver **600** includes an ADC **614,** a match filter equalizer **616,** a demodulator **618,** a de-multiplexer **620,** a LDPC decoder **622** and a post processor **624.** ADC **614** may be arranged to receive an analog signal **602** from satellite transmitter **200** and to output a digital signal **604.** Match filter equalizer **616** is arranged output a recovered signal **606** based on digital signal **604.** In some embodiments, match filter equalizer **616** is arranged to receive digital signal **604** directly from ADC **614.** Demodulator **618** is arranged to output a demodulated signal **608** based on recovered signal **606.** In some embodiments, demodulator **618** is arranged to receive recovered signal **606** directly from match filter equalizer **616.** De-multiplexer **620** may be arranged to output a de-multiplexed signal stream **610** based on demodulated signal **608** and a feedback signal **628.** In some embodiments, de-multiplexer **620** is arranged to receive demodulated signal **608** directly from demodulator **618.** In some embodiment, de-multiplexer **620** is arranged to receive feedback signal **628** directly from post processor **624.** LDPC decoder **622** may be arranged to output a decoded data signal **626** based on de-multiplexed signal stream **610.** In some embodiments, LDPC decoder **622** is arranged to receive de-multiplexed signal stream **610** directly from de-multiplexer **620.** Post processor **624** may be arranged to output a data signal **612** based on decoded data signal **626** and also to deliver timeplan information via feedback signal **628** based on decoded data signal **626.** In some embodiments, post processor **624** is arranged to receive decoded data signal **626** directly from LDPC decoder **622.**

ADC **614** may convert received analog signals transmitted from a satellite to digital format for further processing in a similar manner to ADC **502** as discussed above with reference to **FIG. 5****.** Match filter equalizer **616** may filter digital signal **604** in order to maximize the signal-to-noise ratio of the received signal. Furthermore, match filter equalizer **616** may perform bit timing recovery. Match filter equalizer **616** may operate in a similar manner as match filter equalizer **504** as discussed above with reference to **FIG. 5****.** Demodulator **618** may perform demodulation of recovered signal **606** and may operate in a similar manner as demodulator **508** as discussed above with reference to **FIG. 5****,** except demodulator **618** may operate as a significantly higher rate than demodulator **508.** De-multiplexer **620** may recover the carrier signal and reassemble the digitized, filtered and demodulated received signal into the recovered de-multiplexed signal stream **610.** Furthermore, de-multiplexer **620** may operate in a similar manner to de-multiplexer **506** as discussed above with reference to **FIG. 5****.** LDPC decoder **622** performs decoding for recovery of the originally transmitted information, with exception for performing error detection/correction. LDPC decoder **622** may operate in a similar manner to LDPC decoder **510** as discussed above with reference to **FIG. 5****.** Post processor **624** may perform error detection and for generating timeplan information for delivery to de-multiplexer **620.** Post processor **624** may operate in a similar manner to post processor **528** as discussed above with reference to **FIG. 5****.**

A difference between the embodiment discussed above with reference to **FIG. 5** and the embodiment discussed above with reference to **FIG.6** is the placement of the de- multiplexer with respect to the demodulator. In the embodiment discussed above with reference **FIG. 5****,** de-multiplexer **506** is arranged prior to demodulator **508.** On the other hand, in the embodiment discussed above with reference to **FIG. 6****,** de-multiplexer **620** is arranged after demodulator **618.** Compared to receiver **500,** receiver **600** in operation may require greater complexity, power consumption and processor utilization, and as a result, a higher cost.

As described with reference to **FIGs. 3-6****,** a plurality of streams of information may be assembled and transmitted at a high rate from a single transmitter to a plurality of receivers. The information destined for a single receiver may be a portion of the information as transmitted by the transmitter. The assembly of the transmitted information and the configuration of the receiver enable a portion of the receiver to operate at a reduced rate, with an overall lower power consumption and cost. The examples as discussed above with reference to **FIGs. 3-6** were performed based upon time division multiplexing. However, in accordance with another aspect of the present invention, other types of multiplexing may be used. For example, a transmitter and receiver may be configured where the multiplexing scheme may be based upon code division multiplexing (CDM). CDM employs a special coding scheme, wherein each receiver is assigned a code, to allow multiple users to be multiplexed over the same physical channel. An embodiment using CDM will now be discussed with reference to **FIG. 7****.**

**FIG. 7** illustrates an example CDM codeblock **700.** As illustrated, CDM codeblock **700** includes an outroute **702,** an outroute **704,** an outroute **706** and an outroute **708.** Outroute **702** may be a QPSK modulated bit stream packet and configured as a portion of CDM codeblock **700.** Outroute **704** may be a 16APSK modulated bit stream packet and configured as a portion of CDM codeblock **700.** Outroute **706** may be an 8PSK modulated bit stream packet and configured as a portion of CDM codeblock **700.** Outroute **708** may be a QPSK modulated bit stream packet and configured as a portion of CDM codeblock **700.** Outroutes **702, 704, 706** and **708** may be transmitted simultaneously via a single channel. A bit of information to be transmitted may be translated into a code represented by a multiplicity of bits. The outroutes may have differing and orthogonal codes. The translated orthogonal codes for the various outroutes allows for discrimination between the codes by a receiver or receivers. In operation, individual outroute data streams may be modulated utilizing CDM scheme. Modulated CDM codeblock **700,** an aggregate of outroutes **702, 704, 706** and **708,** may be processed from outroute stream signals **224, 226, 228** and **230.**

**FIG. 8** illustrates an example transmitter performing transmission of codeblocks via CDM modulation as described with reference to the **FIG. 7****,** in accordance with an aspect of the present invention. A transmitter **800** includes CRO **202,** CRO **204,** CRO **206,** CRO **208,** modulator **210,** modulator **212,** modulator **214,** modulator **216,** match filter **220,** DAC **222,** a multiplier **802,** a multiplier **804,** a multiplier **806,** a multiplier **808** and an adder **826.**

CRO **202** may be arranged to receive outroute stream signal **224** and output signal **232.** Modulator **210** may be arranged to output modulated signal **240** based on signal **232.** In some embodiments, modulator **210** is arranged to receive signal **232** directly from CRO **202.** Similarly, CRO **204** may be arranged to receive outroute stream signal **226** and output signal **234.** Modulator **212** may be arranged to output modulated signal **242** based on signal **234.** In some embodiments, modulator **212** is arranged to receive signal **234** directly from CRO **204.** CRO **206** may be arranged to receive outroute stream signal **228** and output signal **236.** Modulator **214** may be arranged to output modulated signal **244** based on signal **236.** In some embodiments, modulator **214** is arranged to receive signal **236** directly from CRO **206.** CRO **208** may be arranged to receive outroute stream signal **230** and output signal **238.** Modulator **216** may be arranged to output modulated signal **246** based on signal **238.** In some embodiments, modulator **216** is arranged to receive signal **238** directly from CRO **208.**

Multiplier **802** is arranged to output a code multiplied signal **810** based on a code **818** and modulated signal **240.** In some embodiments, multiplier **802** is arranged to receive modulated signal **240** directly from modulator **210.** Multiplier **804** is arranged to output a code multiplied signal **812** based on a code **820** and modulated signal **242.** In some embodiments, multiplier **804** is arranged to receive modulated signal **242** directly from modulator **212.** Multiplier **806** is arranged to output a code multiplied signal **814** based on a code **822** and modulated signal **244.** In some embodiments, multiplier **806** is arranged to receive modulated signal **244** directly from modulator **214.** Multiplier **808** is arranged to output a code multiplied signal **816** based on a code **824** and modulated signal **246.** In some embodiments, multiplier **808** is arranged to receive modulated signal **246** directly from modulator **216.**

Adder **826** may be arranged to output a CDM signal **828** based on code multiplied signals **810, 812, 814** and **816.** In some embodiments, adder **826** is arranged to receive code multiplied signal **810** directly from multiplier **802.** In some embodiments, adder **826** is arranged to receive code multiplied signal **812** directly from multiplier **804.** In some embodiments, adder **826** is arranged to receive code multiplied signal **814** directly from multiplier **806.** In some embodiments, adder **826** is arranged to receive code multiplied signal **816** directly from multiplier **808.** Match filter **220** may be arranged output filtered signal **250** based on CDM signal **828.** In some embodiments, match filter **220** is arranged to receive CDM signal **828** directly from adder **826.** DAC **222** may be arranged to output analog signal **252** based on filtered signal **250.** In some embodiments, DAC **222** is arranged to receive filtered signal **250** directly from match filter **220.**

CRO **202, 204, 206** and **208** may operate in a similar manner as discussed above with reference to **FIG. 2C****.** Modulators **210, 212, 214** and **216,** perform modulation and forward error correction coding for input coded signals **232, 234, 236** and **238,** respectively and output corresponding corrected modulated signals **240, 242, 244** and **246** in a similar manner as discussed above with reference to **FIG. 2C****.** Multipliers **802, 804,806** and **808** may be configured as code multipliers, performing multiplication of input signals with specific codes and delivering corresponding code multiplied signals **810, 812, 814** and **816.** For example, multiplier **802** will multiply modulated signal **240** with code **818** to generate code multiplied signal **810.** Adder **826** may perform a summation of input code multiplied signals **810, 812, 814** and **816** and output a single stream of CDM signal **828.** Match filter **220** may perform filtering in order to maximize the signal-to-noise ratio of input CDM signal **828** and output filtered signal **250.** Match filter **220** may operate in a similar manner as discussed above with reference to **FIG. 2C****.** DAC **222** may convert filtered signal **250** to analog signal **252** in a similar manner as discussed above with reference to **FIG. 2C****.** In this non-limiting example, four CROs may accept four outroute streams as discussed with reference to **FIG. 2C****.** However, it should be noted that any number of CROs may be used to a corresponding number of outroute streams.

Accordingly, a receiver (not shown) that is intended to receive modulated signal **240** will recognize the code **818** aspect of code multiplied signal **810.** The receiver that is intended to receive modulated signal **240** will then be able to demodulate and process the information within code multiplied signal **810,** while ignoring code multiplied signals **812, 814** and **816.** Similarly, another receiver that is intended to receive modulated signal **242** will be able to demodulate and process the information within code multiplied signal **812,** while ignoring code multiplied signals **810, 814** and **816.** Further, yet another receiver that is intended to receive modulated signal **244** will be able to demodulate and process the information within code multiplied signal **814,** while ignoring code multiplied signals **810, 812,** and **816.** Finally, still another receiver that is intended to receive modulated signal **246** will be able to demodulate and process the information within code multiplied signal **816,** while ignoring code multiplied signals **810, 812** and **814.**

In accordance with a multiplexed arrangement of the present invention, a plurality of outroute streams may be modulated, each at a conventional rate. Then the plurality of modulated outroute streams may be added together, filtered and converted into analog signals at a much higher rate. Accordingly, the overall data throughput provided by a CDM transmitter in accordance with the present invention is much greater than that of a conventional CDM transmitter as a result of aggregating multiple conventional information streams into an aggregate information stream performing at a significantly higher rate of operation.

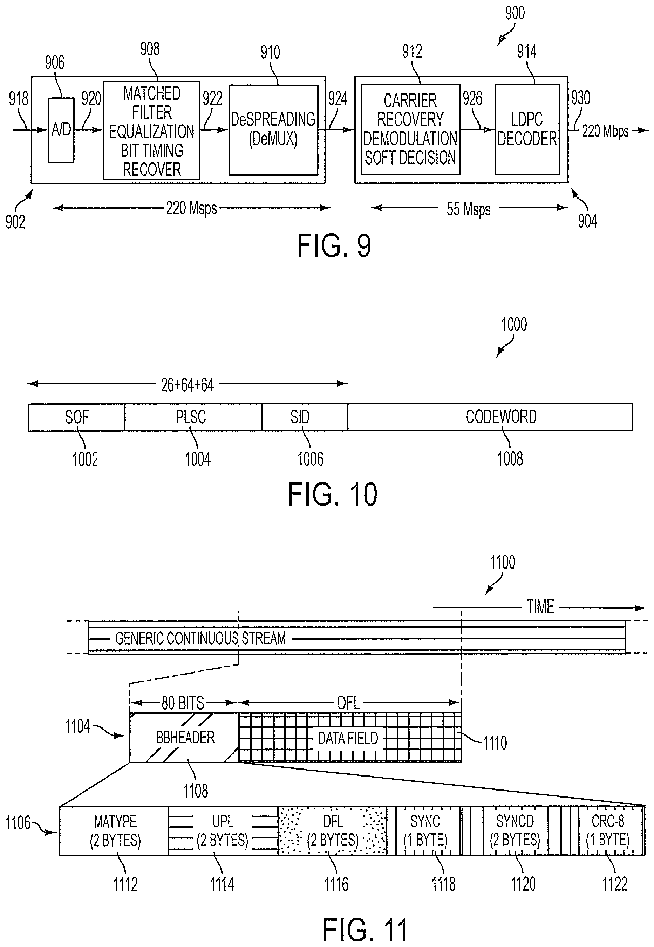

Again, in accordance with an aspect of the present invention, a single transmitter is operable to transmit a single data stream that includes a plurality of outroute codeblocks that have been multiplexed and added together. A single receiver will be able to receive the entire single data stream. For efficient processing, the receiver will only process a portion of the entire received single data stream. This aspect of the present invention will now be described with reference to **FIG. 9****.**

**FIG. 9** illustrates an example CDM receiver, in accordance with an aspect of the present invention. A CDM receiver **900** includes a faster operational portion **902** and a slower operational portion **904.** CDM receiver **900** may receive and process a CDM modulated signal and deliver a recovered signal. Non-limiting examples of processing includes ADC, matched filter equalization, bit timing recovery, de-spreading, carrier recovery, demodulation, soft decision, LDPC decoding and post processing. CDM receiver **900** may receive and process signals as described with reference to **FIG. 7** and as transmitted by receiver **800** as described with reference to **FIG. 8****.** Faster operational portion **902** may receive and process a CDM modulated signal and deliver a de-spreaded signal. Slower operational portion **904** may receive a de-spreaded signal from faster operational portion **902** and deliver a recovered signal. Faster operational portion **902** includes an ADC **906,** a filter **908** and a de-multiplexer 910.

ADC **906** may receive an analog signal **918** and output a digitized signal **920.** Filter **908** is arranged to output a filtered signal **922** based on digitized signal **920.** In some embodiments, filter **908** is arranged to receive digitized signal **920** directly from ADC **906.** De-multiplexer **910** is arranged to output a de-spreaded signal **924** based on filtered signal **922.** In some embodiments, de-multiplexer **910** is arranged to receive filtered signal **922** directly from filter **908.** ADC **906** may perform conversion of a received analog signal **918** to digitized signal **920.** ADC **906** may operate in a similar manner as ADC **502** discussed above with reference to **FIG. 5****.** Filter **908** may process digitized signal **920** received from ADC **906.** Non-limiting examples of processing performed by filter **908** include matched filtering, equalization and bit timing recovery. Filter **908** may optimize the signal-to-noise ratio of a received signal. De-multiplexer **910** may perform de-spreading of received filtered signal **922** and deliver de-spreaded signal **924.**

Slower operational portion **904** includes a demodulator **912** and a LDPC decoder **914.** Demodulator **912** is arranged to output a signal **926** based de-spreaded signal **924.** In some embodiments, demodulator **912** is arranged to receive de-spreaded signal **924** directly from de-multiplexer **910.** LDPC decoder **914** is arranged to output a recovered signal **930** based on demodulated signal **926.** In some embodiments, LDPC decoder **914** is arranged to receive demodulated signal **926** directly from demodulator **912.** Demodulator **912** may process de-spreaded signal **924** received from de-multiplexer **910** and deliver demodulated signal **926.** Non-limiting examples of processing performed by demodulator **912** include carrier recovery, demodulation and soft decision. LDPC decoder **914** may receive demodulated signal **926** from demodulator **912** and perform LDPC decoding. LDPC decoder **914** may operate in a similar manner to LDPC decoder **510** as discussed above with reference to **FIG. 5****.**

CDM receiver **900** may receive analog signal **918** encoded and modulated as described with reference to example CDM codeblock **700** of **FIG. 7****.** Analog signal **918** may be processed at a faster operational speed by faster operational portion **902.** Faster operational portion **902** may deliver a digitized, filtered and de-spread signal denoted as de- spreaded signal **924.** Slower operational portion **904** may receive de-spreaded signal **924** and perform demodulation and decoding of de-spreaded signal **924** for delivery of recovered information via recovered signal **930.** Outroute **702** may illustrate an example of recovered information.

For purposes of discussion, presume that analog signal **918** corresponds to the combination of outroutes **702, 704, 706** and **708,** which corresponds to analog signal **252** as provided by transmitter **800.** Further, presume that CDM receiver **900** is configured to retrieve data within outroute stream signal **226,** which in this example corresponds to outroute **704.** In this example, the processing of analog signal **918** is performed at an increased rate by faster operational portion **902.** Now, presume that de-spreaded signal **924** corresponds to modulated signal **242** and presume that modulated signal **242** corresponds to outroute **704.** In such a case, slower operational portion **904** only be required to demodulate and decode the portions of analog signal **252** that corresponds to modulated signal **242.** Therefore, slower operational portion **904** may operate at a reduced rate. Furthermore, operation at a reduced rate reduces cost, complexity, semiconductor real-estate and power consumption.

**FIG. 10** illustrates an example codeblock frame **1000,** in accordance with an aspect of the present invention. A codeblock frame **1000** includes, a start of frame (SOF) **1002,** a physical layer signaling code (PLSC) **1004,** a stream identifier (SID) **1006** and a codeword **1008.** SOF **1002** may be arranged at the beginning of the example codeblock frame **1000.** PLSC **1004** may be arranged to follow SOF **1002** in the frame structure of example codeblock frame **1000.** SID **1006** may be to follow PLSC **1004** and prior to codeword **1008** in example codeblock frame **1000.** Codeword **1008** may be arranged at the end of example codeblock frame **1000.** SOF **1002** may be configured as a 26 bit sub-frame for identifying a start of the frame. PLSC **1004** may be configured as a 64 bit sub-frame for performance of physical layer signal coding. The coding may be a portion of example codeblock frame **1000** and may be transmitted or received during communication between a transmitter and a receiver. SID **1006** may be configured as a 64 bit Stream identifier for identifying a stream at a receiving station. SID **1006** may be intended to be received by a station that receives frames corresponding to a SID match. SID **1006** may also inform the receiver what the modulation scheme of the codeblock. Codeword **1008** contains the original information, wherein the information is coded bits.

In operation, outroute signals, described with reference to **FIG. 2C****,** may be formed into a frame structure with building blocks SOF **1002,** PLSC **1004,** SID **1006** and codeword **1008.** A codeblock may be configured as a first level framing structure containing synchronization and signaling information as described with reference to **FIG. 4** and **FIG. 7****.**

In accordance with an aspect of the present invention, an example stream format for a generic continuous stream will now be described in greater detail with reference to **FIG. 11****.** Generic Stream Encapsulation (GSE) protocol may enable efficient encapsulation of internet protocol (IP) and other network layer packets over a generic physical layer. Encapsulated data may be transported over GSE packet streams. GSE encapsulation relies on the physical layer being able to perform error detection.

**FIG. 11** illustrates an example stream in accordance with an aspect of the present invention. A stream **1100** includes a multiplicity of frames with a sampling denoted as a frame **1104.** Stream **1100** may be used for communication between a transmitter and a receiver (e.g. transmitter **200** of **FIG. 2C****,** receiver **500** of **FIG. 5****,** receiver **600** of **FIG. 6****,** transmitter **800** of **FIG. 8** and CDM receiver **900** of **FIG. 9****.** Frame **1104** includes a sub frame base band header (BBHEADER) **1108** and a data field (DATAFIELD) **1110.** BBHEADER **1108** includes a subframe **1106,** subdivided further into smaller frames, such as, a transport stream input (MATYPE) **1112,** a user packet length (UPL) **1114,** a data field length (DFL) **1116,** a synchronization bit (SYNC) **1118,** a distance from the beginning of a datafield (SYNCD) **1120** and a cyclic redundancy check bit (CRC-8) **1122.** BBHEADER **1108** and DATAFIELD **1110** may be arranged within stream **1100.** MATYPE **1112,** UPL **1114,** DFL **1116,** SYNC **1118,** SYNCD **1120** and CRC-8 may be arranged within BBHEADER **1108.**

Stream **1100** may be configured as an outroute stream with a multiplicity of codeblocks multiplexed into a single stream using either TDM or CDM multiplexing methods. Frame **1104** may be configured as a packet format within stream **1100** delivering BBHEADER **1108** and DATAFIELD **1110.** MATYPE **1112** may be configured as a portion of subframe **1106,** comprising a 2-byte packet operating as a transport stream input. UPL **1114** may be configured as a portion of subframe **1106,** a 2-byte packet functioning as a user packet length for stream **1100.**

DFL **1116** may be arranged within BBHEADER **1108.** DFL **1116** may provide user data field length and prevent the packet from becoming fragmented during the transport process. SYNC **1118** may be arranged within BBHEADER **1108.** SYNC **1118** may provide a synchronization bit to BBHEADER **1108** for providing frame synchronization. SYNCD **1120** may be arranged within BBHEADER **1108.** SYNCD may provide a value indicating distance in bits from the beginning of DATAFIELD **1110** to the end DATAFIELD **1110.** CRC-8 **1122** may be arranged within BBHEADER **1108.** CRC-8 **1122** may provide an error detection code applied to the first 9 bytes of BBHEADER **1108.**

In operation, stream **1100** includes a multiplicity of frames **1104** with a variable length. Encapsulated IP packet data may be transported using GSE streams. Each GSE packet may be composed of GSE header followed by GSE payload reference as DATAFIELD **1110.** BBHEADER **1108** may be composed of MAYTYPE, UPL, DFL, SYNC SYNCD and CRC-8 as described with reference to **FIG. 11****.** Variable lengths for frame **1104** may prevent information from being transported via packets and, as a result, some of the unused bits in BBHEADER **1108** may be used for de- multiplexing codeblocks.

In accordance with an aspect of the present invention, a receiver may determine which codeblocks should be demodulated and decoded from the entire received stream of codeblocks based on a timeplan. The timeplan indicates the position of each of the codeblocks within the stream of codeblocks or superframe, and the corresponding terminal or receiver class that is configured or intended to decode each respective codeblock. For example, according to one exemplary embodiment, a predetermined and fixed timeplan may be specified for a respective downlink carrier, and all terminals or receivers monitoring that carrier would follow the timeplan. Such a scheme, however, is relatively inflexible and inefficient in terms of bandwidth utilization. The inflexibility arises from the fact that the timeplan is fixed, and modification of the timeplan for a carrier would require a reconfiguration of each of the terminals monitoring that carrier. The inefficiency arises from the fact that, for a given timeplan (e.g., taking into account a worst case scenario of bandwidth allocation), the timeplan may be applicable to only a small percentage of the operation time, and thus, at times when an allocation is not being fully utilized by a terminal, the unutilized bandwidth may be wasted.

According to a further exemplary embodiment, however, the timeplan may be dynamic in that it can be modified essentially at any given time. In such an embodiment, the timeplan is periodically transmitted (e.g., on a broadcast channel), and each terminal periodically acquires the timeplan to synchronize with the then current multiplexing scheme (e.g., the current assignment of codeblock positions to a respective terminal or receiver class). Accordingly, this scheme provides considerable flexibility, such as the ability to dynamically allocate the bandwidth of a particular downlink carrier to the different terminal classes. Such flexibility, however, comes at the cost of some overhead in transmitting the timeplan every super frame (albeit, a very small loss of bandwidth). In this case, the carrier is already acquired, so the timeplan can be read from the decoding of the codeblock within which the timeplan is carried, however, there is an increase in overhead associated with transmitting the timeplan in every superframe. According to the present specification and accompanying drawings, while the timeplan is described and illustrated with respect to various exemplary embodiments, the timeplan is not limited only to such described and illustrated embodiments. It will, however, be evident to one of ordinary skill in the art that various modifications may be made thereto, and additional embodiments may be implemented, without departing from the broader scope of the invention as set forth in the claims that follow.

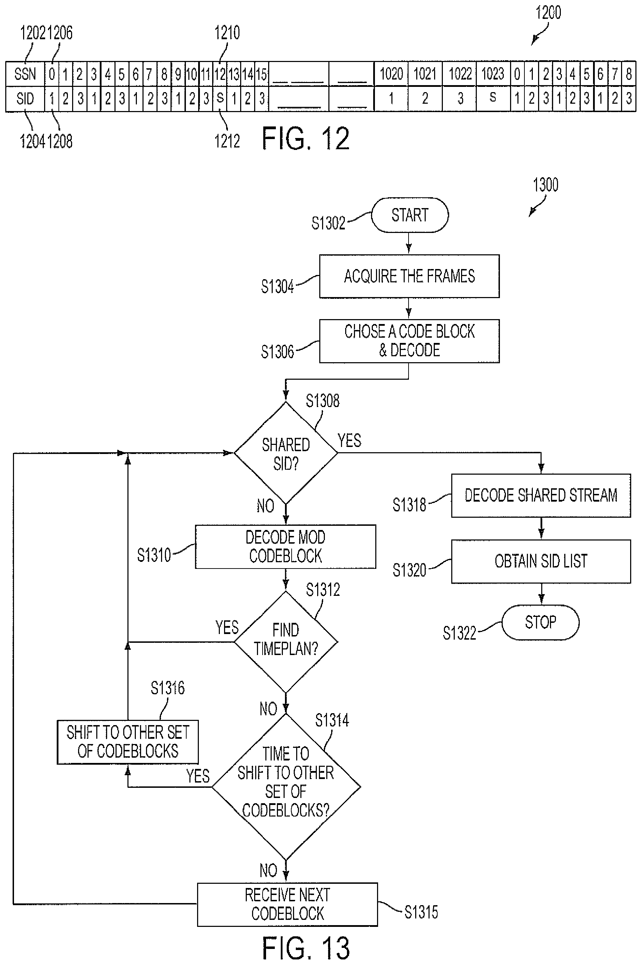

**FIG. 12** illustrates an example timeplan in accordance with an aspect of the present invention. A timeplan **1200** includes a stream sequence number (SSN) **1202** and a stream identifier SID **1204.** An element of SSN **1202** may be arranged with a corresponding SID **1204** within timeplan **1200.** Essentially, the timeplan comprises an ordered list of SSNs and corresponding SIDs. Each SSN reflects a respective codeblock position within a superframe, numbered sequentially to reflect the sequential codeblocks of the superframe. For example, the SSNs for a superframe of 1024 codeblocks will be sequentially numbered from 0 to 1023. Each SID reflects a stream ID indicating the receiver or terminal classes that are intended to receive and decode the codeblock located at the position within the superframe corresponding to the respective SSN. Timeplan **1200** may be communicated via codeblock **402 (****FIG. 4****).** The codeblock location for transmission of the timeplan **1200** may repeatedly be transmitted via the same codeblock. In other words, according to an exemplary embodiment, the timeplan is transmitted once within every superframe, and is consistently transmitted in the same respective position within each superframe (e.g., at the first position corresponding to SSN "0"). Further, in an exemplary embodiment, the timeplan is transmitted on a broadcast channel, on which a terminal may acquire various types of system information, such as configuration information and the like. The broadcast channel is intended to be decoded by the universe of terminals serviced by the particular carrier.

In an example embodiment, SSN **1202** may be configured as a 10-bit counter from 0 to 1023 within timeplan **1200** for assigning sequence number to codeblocks. SID **1204** may be configured for indicating a portion of a stream for reception by a receiving terminal and a portion of a stream for reception by the universe of receiving terminals. An outroute is a combination of substreams, where multiple outroutes may be transmitted over a single channel or satellite transponder (e.g., to a spot beam). In other words, according to an exemplary embodiment, a specific timeplan covers the multiplexing scheme for all channels of the terminals within a downlink beam (e.g., receiving transmissions from one downlink transmission carrier - such as, in a high bandwidth satellite with upwards of 250 MHz carriers). Accordingly, a timeplan is transmitted for every such channel. Furthermore, in an example embodiment, timeplan **1200** is transmitted periodically, for example, once every **1024** codeblocks.

In operation, timeplan **1200** may be configured as a sequence of SSN **1202** with a corresponding SID **1204** and may be broadcast to all receivers within a system. For purposes of discussion, presume that transmitter **200** of **FIG. 2C** transmits analog signal **252** to four different receivers, wherein the four different receivers are constructed so as to demodulate and process one of outroute stream signal **224,** outroute stream signal **226,** outroute stream signal **228** and outroute stream signal **230** respectively. In such a case each of the four receivers will receive the entire analog signal **252,** which includes timeplan **1200.**

Furthermore, a receiver attempting to acquire information via an outroute carrier would receive timeplan **1200** within a predetermined period of time. A receiver may receive and decode timeplan **1200** to determine which portions or codeblocks of a stream are associated with the receiver. At that point, the receiver would then decode the stream that carries the SID and SSN information. Reception and decoding of timeplan **1200** by a receiver may occur periodically as necessary. Following reception of an initial timeplan **1200,** a determination of operating on a different outroute may be realized, after which a receiver may switch to the correct outroute. Following a switch to a new channel, a receiver may receive and decode a new timeplan **1200** corresponding to the new outroute.

For example, a sequence number **1206** may have a value of "0," indicating the first transmission for SSN **1202** and SID **1204.** Furthermore, an identifier **1208** may have a value of " 1," indicating the first portion of a codeblock may be received by receiver "1." Similarly, a sequence number **1210** may have a value of "12" indicating the twelfth transmission for SSN **1202** and SID **1204.** Further, an identifier **1212** may have a value of "S" indicating that the twelfth portion of a codeblock may be received by the universe of receivers.

In other words, an SSN 1206 may have a value of "0," indicating the time of transmission of the first codeblock of the respective superframe. Furthermore, the SID **1208,** corresponding to the SSN 1206, may have a value of "1," indicating that the first portion or codeblock of the superframe should be decoded by receivers or terminals configured or classified for codeblocks of SID values of "1." Similarly, an SSN **1210** may have a value of "12," indicating the time of transmission of the thirteenth codeblock of the respective superframe. Further, an SID **1212,** corresponding to the SSN **1210,** may have a value of "S," identifying a shared or broadcast transmission in thirteenth portion or codeblock of the superframe, which should be decoded by the universe of receivers following the respective timeplan.

Accordingly, once a receiver or terminal is synchronized with the data stream, and has acquired the appropriate timeplan, the receiver follows the SIDs of the timeplan, and decodes only the corresponding portions or codeblocks of the superframe for the SIDs that match the SIDs for which the terminal is configured or classified. Based on a timeplan, therefore, the bandwidth of each superframe can be allocated amongst the classes of terminals based on the number of codeblocks of a superframe allocated to each terminal class or SID. Moreover, certain classes of terminals, which process the data streams at faster rates, can be allocated further bandwidth by assigning multiple SID values to the particular terminal class (e.g., at a minimum, a terminal may be assigned 2 SIDs - one specific SID and the shared or broadcast SID - and a faster terminal may be assigned multiple SIDs - such as a specific SID and one or more SIDs for a multicast community). According to one embodiment, however, a constraint may exist in that the bandwidth allocation to a given terminal class should not exceed the decode rate capabilities of the terminal receiver (e.g., if a terminal receiver decodes at a rate of one of every four codeblocks, then the codeblock allocation should not exceed an assignment of more than one codeblock of every four consecutive codeblocks to that specific terminal class). According to other exemplary embodiments, however, one of skill in the art would recognize that a scheme may be implemented to, for example, buffer codeblocks and allow a terminal to catch up in the event that the bandwidth allocation to a terminal exceeds the decode rate of the terminal for a short duration of time. Additionally, the bandwidth allocation may be dynamically updated by updating the timeplan at any given time.

Further, a single SID, however, may, for example, be shared with many thousands of terminals, and thus, only a relatively low percentage of codeblocks designated (based on an SID) for a class of terminals may be relevant to any given terminal in that class. Accordingly, once a terminal determines that a codeblock is to be decoded by that terminal (based on the SID), for example, the terminal after decoding may determine whether data within the codeblock is in fact addressed to that terminal based on a higher layer protocol, such as the media access control (MAC) layer (e.g., based on a MAC ID) (where such higher layer protocol is independent of the embodiments of the present invention, and would be known to and understood by one of ordinary skill in the art).

Accordingly, exemplary embodiments provide a system in which multiple different point-to-point, multicast and broadcast traffic streams can be encoded and multiplexed onto a common modulated carrier. Further, each terminal can be configured or designated to decode and process one or multiple of those streams. Moreover, in such a system, sizes of the streams can be dynamically varied based on offered load, priorities, and other policies, up to the modulated carrier symbol rate. Such dynamic variation can be accomplished with a timeplan in accordance with exemplary embodiments, transmitted in a broadcast stream indicating the stream size configuration for a given epoch. The system may also include a gateway that dynamically manages relative stream sizes such that each terminal or class of terminals is not overloaded by the receipt and processing of aggregate bandwidth beyond the capabilities of the terminal or class of terminals. The timeplan according to exemplary embodiments can be used to assign broadcast or multicast streams in accordance with communities of interest, such that a given terminal processes only that broadcast or multicast application traffic to which the terminal is subscribed or which the terminal is designated or configured to receive.

Additionally, in such a system, point-to-point streams may also be used to enable independent service providers to communicate with their separate subscribers, while making maximal use of common wholesaler infrastructure and bandwidth. The satellite operator can act as a wholesaler for its infrastructure and bandwidth, whereby the multiplexing scheme allows the wholesaler to sell these assets to various independent service providers. Then, utilizing the multiplexing scheme of exemplary embodiments of the present invention (as herein described), the independent service providers can dynamically manage bandwidth to their customers. For example, the satellite operator can assign various SIDs of the timeplan amongst service provider clients. Each service provider client can then divide its assets (i.e., SIDs) into point to point and/or multicast SIDs, based on depending on user or customer communities of interest. The multiplexing scheme would thereby provide each service provider with the capability to independently and dynamically allocate the amount of stream size based on offered load, priorities, and other policies.

**FIG. 13** illustrates an example method **1300** for timeplan acquisition, in accordance with an exemplary embodiment of the present invention. Initially, for example, on power-up, a terminal synchronizes with a data stream in accordance with the normal synchronization process of the DVB-S2 Standard, for example, based on the physical layer header (PLHEADER). Then the timeplan acquisition method, for example, according to the exemplary embodiment of the method **1300** starts **(S1302),** and the frames may be acquired **(S1304).** Receiver **500** of **FIG. 5****,** receiver **600** of **FIG. 6** or CDM receiver **900** of **FIG. 9** may begin receiving a stream of information as denoted by stream **1100** of **FIG. 11****.** For purposes of simplifying the discussion, presume that receiver **500** is used. Furthermore, receiver **500** may perform frame synchronization for determining the start of frame **1104.** Still further, receiver **500** may receive and process received frames (e.g. frame **1104).** Receiver **500** may then select a codeblock for processing **(S1306).** For purposes of discussion, presume that receiver **500** selects the first codeblock for processing. The selection of codeblock to process may be performed via de-multiplexer **506.**

It may then be determined whether the selected codeblock has a shared SID "S" **(S1308).** For example, SID **1006** of **FIG. 10** may be decoded by post processor **528.** Decoded SID **1006** may indicate whether the received information may be communicated to a particular receiver as illustrated by identifier **1208** of **FIG. 12** or the universe of terminals as illustrated by identifier **1212.** If it is determined that the selected codeblock does not have a shared SID **(S1308),** then the receiver may receive and decode a codeblock from a different portion of frame **1104** of **FIG. 11** **(S1310).** For example, receiver **500** may then select another codeblock for processing. At this point it may be determined whether the newly selected codeblock includes a timeplan **(S1312).** If so, then it is again determined whether the newly selected codeblock has a shared SID **(S1308).**

If the selected codeblock does not include a timeplan **(S1312),** then a determination for shifting to an alternate set of codeblocks may be determined **(S1314).** For example, once receiver **500** has received and decoded a timeplan, receiver **500** may determine the proper codeblocks to receive and process. If it is determined that it is not time to shift to an alternate set of codeblocks, then another codeblock may be received **(S1315)** followed by a determination of shared SID **(S1308).** In an example embodiment, a first set of codeblocks may have even SSN, whereas the other set may have odd SSN. If the shared SID is not found in the first set of codeblocks, it will be found in the next set of codeblocks. If it is determined that it is time to switch to an alternate set of codeblocks **(S1314),** then the sequence of codeblocks may be switched to the alternate set and a codeblock from the alternate set may be received **(S1316)** followed by a determination of shared SID **(S1308).**

Once it is determined that there is a shared SID **(S1308),** the shared stream may be decoded **(S1318).** At that point, the SID list may be generated **(S1320).** A shared SID contains information to be shared by all substreams. One type of shared information that may be in a shared SID is the timeplan. In an example embodiment, a timeplan is transmitted once in a superframe (e.g., a frame of 1024 codeblocks corresponding to SSNs 0-1023), many of which may be shared SIDs. As such, when the SID list is generated, the shared SIDs are searched for the timeplan. Receiver **500** may determine portions of the codeblock associated with receiver **500** as described with reference to **FIG. 2C****.** For example, presume for the sake of discussion that receiver **500** corresponds to SID 1 within timeplan **1200** of **FIG. 12****.** Accordingly, receiver **500** would then decode SSNs having an SID 1 associated therewith. Returning to **FIG. 5****,** post processor **528** would then instruct de-multiplexer **506,** via data signal **526,** to only pass the codeblocks corresponding to the SSNs associated with the SID 1 of timeplan **1200.**

Once a receiver has acquired the timeplan and determined portions associated with receiver, execution of method **1300** may terminate **(S1322).**

In other words, according to an exemplary embodiment, once synchronized to the frame, the receiver can begin the process of acquiring the timeplan, beginning with acquisition of the data stream or the frames. The receiver then selects an arbitrary codeblock to decode, and determines whether the codeblock is a shared or broadcast codeblock, or a codeblock directed at a particular class of terminals, based on the SID. The SID and SSN of a particular codeblock, for example, can be coded into the baseband header (BBHEADER) of the codeblock (e.g., utilizing unused bits of the header, such as unused bits of the MATYPE or SYNCD headers), as described in further detail below. If the codeblock is a shared codeblock, then the receiver determines whether the codeblock contains the timeplan. For example, the timeplan may be determined through upper layer mechanics that can identify the timeplan based on certain information, such as IP headers (where such mechanisms are independent of the embodiments of the present invention, and would be known to and understood by one of ordinary skill in the art). If the receiver determines that the codeblock is not a shared codeblock or doesn't contain the timeplan, then the receiver moves on and decodes the next codeblock.

For example, based on the processing rate of the terminal, the receiver may be able to decode two of every four codeblocks, in which case, the receiver will decode every other codeblock (e.g., either the odd or even SSN codeblocks). For this example, say the receiver is decoding the even codeblocks, and the superframe contains 1024 codeblocks. If the receiver runs through all 512 even codeblocks, and does not locate the timeplan, the receiver will then shift to the odd SSN codeblocks (S1314), and repeat the process until the receiver acquires the timeplan. For example, in one embodiment, the receiver can track the number of codeblocks accessed based on a counter. Then, for a superframe of 1024 codeblocks, a 10 bit counter can track the progress by either incrementing by 2 for every codeblock accessed, and the receiver can detect the time to shift to odd SSNs when the counter reaches 1024, or by incrementing by 1 for each codeblock accessed, and the receiver can detect the time to shift when the counter reaches 512. Accordingly, in the example of the receiver running at a rate of decoding two of every four codeblocks, worst case, the receiver will acquire the codeblock within two superframes, where the timeplan is located at the same codeblock position in each superframe. Similarly, for example, with a receiver running at a rate of decoding one of every four codeblocks, worst case, the receiver will acquire the timeplan within four superframes. Additionally, as specified above, according to the embodiment where the timeplan is transmitted once within every superframe, if a new terminal comes on line, then that terminal will not have to wait an extended period to acquire the timeplan, as it is transmitted every superframe, an there will then be a worst case depending only on the receiver decode rate. Alternatively, in a further exemplary embodiment, the timeplan may be transmitted periodically skipping a number of superframes (e.g., transmitted every N superframes), except in such cases, the longer the period between timeplan transmissions (e.g., the larger the value of N), the longer it may tale to acquire or update the timeplan.

Accordingly, the acquisition method **1300,** for acquiring the timeplan represents a totally flexible scheme, where the timeplan may be transmitted within any codeblock of the superframe, without the receiver having any knowledge of the SSN position wherein the timeframe resides.

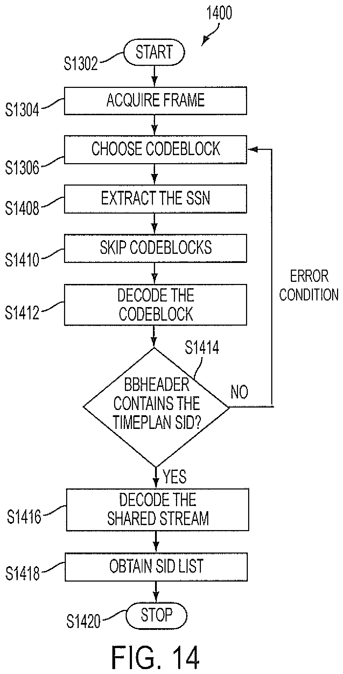

**FIG. 14** illustrates an example method **1400** of timeplan acquisition, in accordance with a further exemplary embodiment of the present invention. This method presents a simplified method for timeplan acquisition requiring less processing for timeplan acquisition as compared to method **1300.** Again, initially, for example, on power-up, a terminal synchronizes with a data stream in accordance with the normal synchronization process of the DVB-S2 Standard, for example, based on the PLHEADER. The beginning of method **1400** is similar to method **1300** discussed above with reference to **FIG. 13****.** In particular, the timeplan acquisition method, for example, according to the exemplary embodiment of the method **1400** starts **(S1302),** frames are acquired **(S1304)** and an arbitrary codeblock is selected **(S1306).**

At this point method **1400** differs from method **1300.** According to this embodiment, the SSN is extracted from the selected codeblock **(S1408).** As specified above, for example, the SID and SSN of a particular codeblock can be coded into the BBHEADER of the codeblock, as described in further detail below. Based upon on the extracted SSN, the receiver may skip codeblocks to advance to the position of the timeplan **(S1410).** For example, in the situation where the timeplan is transmitted in the first codeblock of the superframe (SSN "0"), based on the extracted SSN, the receiver can determine how many codeblocks to skip before the first position of the next superframe is reached (e.g., if the extracted SSN is "1000," then the next 23 codeblocks can be skipped before reaching the first codeblock of the next superframe). Once the first codeblock of the next superframe is decoded, it is then determined whether the accessed codeblock has the shared SID "0" **(S1414).** For example, for purposes of discussion, presume that SID **1006** of **FIG. 10** is decoded. Decoded SID **1006** may indicate whether the received information may be communicated to a particular receiver (for example as illustrated by identifier **1208** of **FIG. 12****)** or to all the receivers (for example as illustrated by identifier **1212).** If it is determined that the accessed codeblock does not have the shared SID "0," then an error condition is determined, and a new codeblock is chosen **(S1306).** Alternatively, if it is determined that the accessed codeblock does have the shared SID, then the codeblock may be decoded to obtain the timeplan **(S1416** and **S1418).**

Once the receiver has acquired the timeplan and thereby determined positions of the codeblocks, directed to the SID of that terminal, within the superframes of the data stream, method **1400** stops **(S1420).**

Accordingly, the acquisition method 1400, for acquiring the timeplan represents a less flexible scheme, where the receiver requires prior knowledge of the SSN position wherein the timeplan resides (e.g., within the codeblock of the first position of a superframe - SSN = "0"). At the same time, however, the method 1400 represents a scheme whereby the timeplan may be acquired in a significantly quicker fashion, in that the receiver can determine the exact number of codeblocks to skip to reach the codeblock wherein the timeplan resides, and, worst case, the receiver need only wait one superframe before acquiring the timeplan (e.g., if the first codeblock acquired by the receiver is the next codeblock after the timeplan - then the receiver must skip the next 1023 codeblocks).

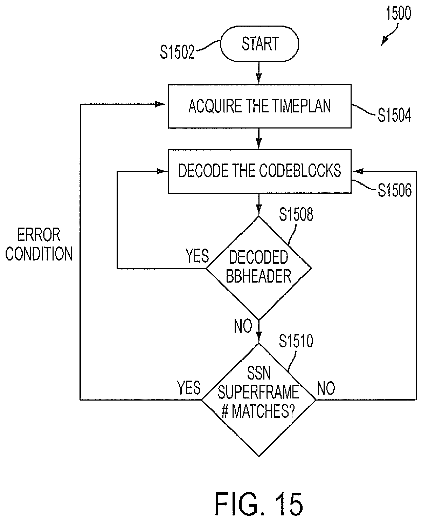

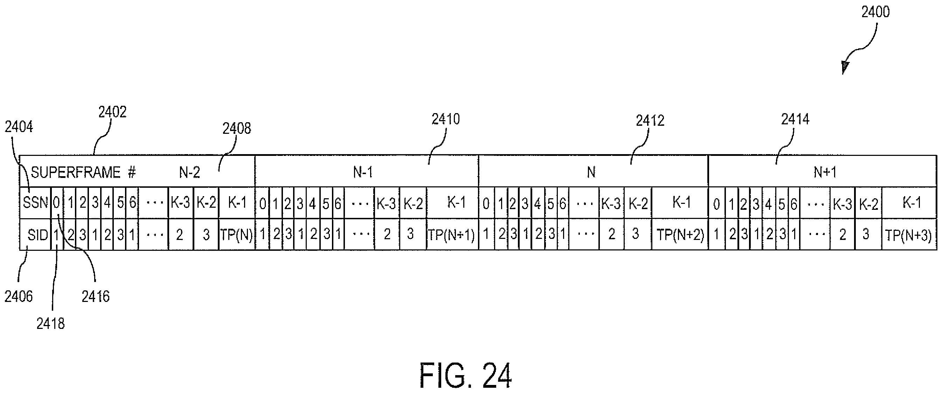

**FIG. 15** illustrates an example method of timeplan acquisition following powering up of a receiver, in accordance with an aspect of the present invention. A method **1500** starts **(S1502)** and timeplan **1200** of **FIG. 12** may be acquired. Following powering up of a receiver, timeplan **1200** may be acquired in a similar manner as discussed above with referenced to **FIG. 13** or **FIG. 14****.** Received codeblocks may be decoded **(S1506).** A receiver may receive and decode codeblocks as discussed previously with reference to **FIGs. 3-11****.** A determination as to whether received codeblocks correspond to correct codeblocks associated with timeplan **1200** may be performed **(S1508).** For a determination of not receiving codeblocks associated with timeplan **1200 (S1508),** a receiver may skip codeblocks until receiving a codeblock associated with timeplan **1200 (S1510).** A receiver may ignore or disregard information received not associated with timeplan **1200.** Following power-up, a received timeplan **1200** may not correspond with received information and a receiver may skip received information until received information corresponds with timeplan **1200.** For example, a timeplan may be modified synchronous with a receiver powering up and the received timeplan may be associated with information to be received at a later point in time. In other words, since the timeplan change takes 2 super frames to become active as explained in **FIG. 24****,** there is a possibility that at power up a terminal has acquired the new timeplan but that timeplan does not become active until two superframes later (albeit this possibility is very low). Thus when the terminal uses this new timeplan to decode it may not correctly receive data for the next two superframes, until this timeplan becomes active. **FIG. 15** shows a method of fly wheeling through the next two super frames. After fly wheeling through two super frames the received data does not match the acquired timeplan then it is an error condition and the receiver goes to reacquiring the timeplan.

According to a further embodiment, signaling for identification of the SSN and SID for each codeblock may be implemented using the baseband header (BBHEADER) **1104** of a codeblock (as depicted in **Fig. 11****).** The DVB-S2 Standard addresses both Broadcast and Interactive modes of operation. The Broadcast mode uses a packetized protocol, consisting of either packetized multi-protocol encapsulation (MPE) or packetized generic stream encapsulation (GSE). The Interactive mode can use either the packetized MPE or GSE protocol or continuous GSE protocol. The continuous GSE protocol is more efficient than the packetized modes, however, in order to support both the Broadcast and Interactive modes of the DVB-S2 Standard, a system must support both the packetized and continuous protocols. In accordance with the present invention, therefore, exemplary embodiments provide a multiplexing system and scheme that supports either the Broadcast or Interactive modes using packetized MPE/GSE protocols.

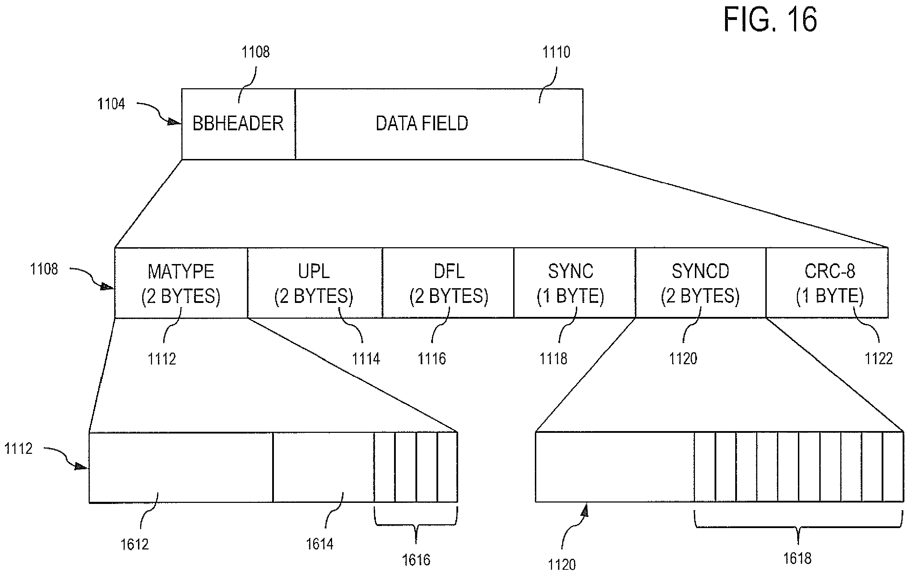

With reference to **FIG. 16****,** when operating in an interactive or IP mode employing the continuous GSE protocol, certain portions of the BBHEADER are inapplicable or unused (e.g., certain bits of the MATYPE field of the BBHEADER, and certain bits of the SYNCD field of the BBHEADER). According to one exemplary embodiment, therefore, such bits may be used to identify the SID and SSN for the respective codeblock. For example, as shown in **FIG. 16** a certain number of bits of the MATYPE field **1112** (e.g., the first and second bytes of the MATYPE field may be referred to as the MATYPE-1 field **1612** and MATYPE-2 field **1614,** respectively) may be used to identify the SID **1616** (e.g., with 4 bits, 16 different SID classes can be defined, including one shared or broadcast SID). Also, a certain number of bits of the SYNCD field can be used to identify the SSN **1618** (e.g., 10 bits of the SYNCD field can reflect 1024 SSNs for identifying 1024 codeblocks of a superframe). These examples of header bits utilized to identify the SID **1616** and SSN **1618** of a codeblock are only examples, and, as would be recognized by one of skill in the art, different header bits may be utilized. For example, depending on the current mode of operation other unused header bits may be utilized to identify the SID **1616** and SSN **1618** of a codeblock. Further, different numbers of bits may be utilized to identify each of the SID **1616** and SSN **1618** of a codeblock, which in turn would result in different respective numbers of terminal or receiver SID classes and SSN numbers (numbers of codeblocks per superframe).

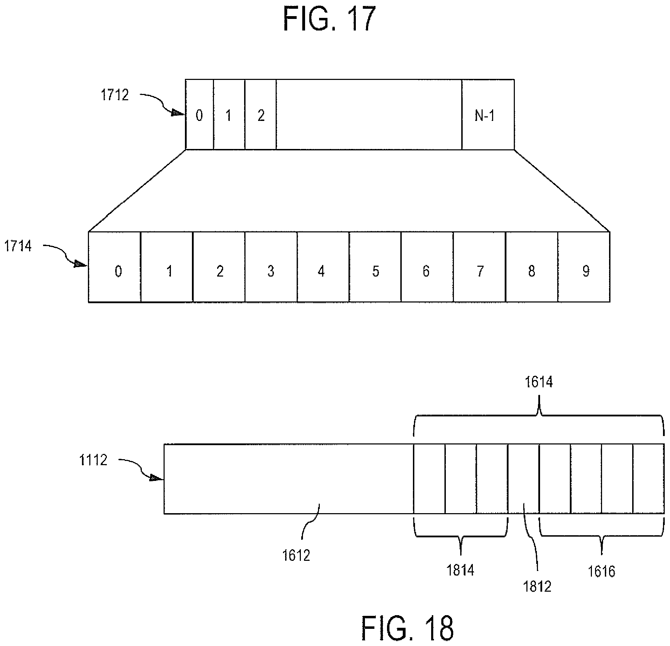

Moreover, using an N-bit counter **1712 (****FIG. 17****),** where N corresponds to the number of bits necessary to signify the number of SSNs for the number of codeblocks of a superframe (e.g., a ten bit counter 1714 for a superframe of 1024 codeblocks), the receiver can track the sequential codeblocks, and hence the SSNs, of the superframe, separate from the explicit specification of the SSN (e.g., via the SYNCD field of the header). Accordingly, at any given time, the receiver can verify synchronization with the timeplan by checking a given SSN extracted from the codeblock header at a given point in time against the counter. If, at any time, the extracted SSN fails to match the counter, the terminal can implement a recovery process to reestablish synchronization.

Additionally, according to another exemplary embodiment, the number of bits utilized for the SSN 1618, and thus the resulting number of codeblocks per superframe, may also be dynamically configurable. In such a case, for example, the system may reconfigure the number of codeblocks per superframe by providing updated configuration information to the terminals over the broadcast channel, which changes the number of codeblocks per superframe by changing the number of header bits that specify the SSN 1618.

According to a further exemplary embodiment, when operating in a broadcast mode, for example, employing the packetized MPE or packetized GSE protocol, again certain portions of the BBHEADER are inapplicable or unused (e.g., certain bits of the MATYPE field of the BBHEADER). Accordingly, such bits may be used to identify the SID and SSN for the respective codeblock. In accordance with such packetized protocols, however, different bits are unused as compared to the continuous GSE protocol, and, in fact fewer bits are available. A problem, therefore, exists in achieving an equivalent level of flexibility and efficiency, as is achieved with the continuous GSE protocol (as described above), with the fewer number of bits available in the BBHEADER. According to the packetized MPE/GSE protocol, for example, only one byte (8-bits) within the BBHEADER of each codeblock is available (e.g., one byte of the MATYPE **1112** field of the header, specifically, for example, the MATYPE-2 field 1614).

According to a further exemplary embodiment, therefore, a method is provided for achieving such flexibility and efficiency with the fewer number of bits available in the BBHEADER. In this embodiment, with reference to **FIG. 18****,** five of the eight bits of the MATYPE-2 field of the header of a codeblock are utilized to specify the SID and the SSN for the codeblock. The SID may be explicitly coded and the SSN may be implicitly coded. For example, as with the continuous protocol (as described above), a certain number of the available bits of the header may be used to identify the SID **1616** (e.g., again, with 4 bits, 16 different SID classes can be defined, including one shared or broadcast SID). In this case, however, instead of explicitly providing the SSN (e.g., **1618** OF **FIG. 16****)** via a certain number of header bits that result in a corresponding number of SSNs, and hence codeblocks per frame, the SSN is implicitly coded into the header using, for example, only one bit. According to this embodiment, one bit of the MATYPE-2 field **1614** of the header is utilized to provide a superframe flag for the implemented multiplexing scheme (the multiplexing superframe flag or MSF **1812).** The MSF **1812** signals the start of each superframe, and from that, using an N-bit counter, where N corresponds to the number of bits necessary to signify the number of SSNs for the number of codeblocks of a superframe (e.g., a ten bit counter for a superframe of 1024 codeblocks), the receiver can track the sequential codeblocks, and hence the SSNs, of the superframe.

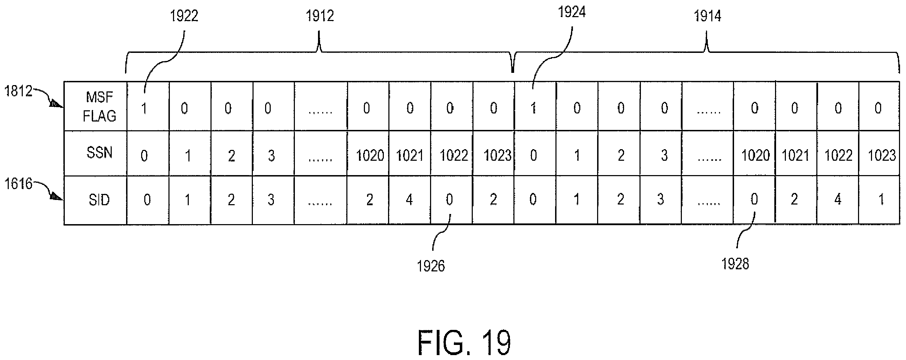

More specifically, when operating in a broadcast mode (e.g., employing the packetized MPE or packetized GSE protocol), **FIG. 19** illustrates the signaling for such a multiplexing scheme, where the SID **1616** is explicitly coded using 4 bits of the MATYPE-2 header field, and the SSN is implicitly coded using 1 bit of the MATYPE-2 header field for the MSF **1812.** In **FIG. 19****,** it should be noted that the SSN is not explicitly coded in the codeblocks, but is shown here to illustrate the codeblock SSN position within the superframe, and as may be tracked by the terminal via the counter **1714.** The MSF **1812** and SID **1616** are associated with two 1024 codeblock superframes, the first corresponding to SSNs 0-1023 **(1912)** and the second corresponding to SSNs 0-1023 **1914).** The "1" value **1922** of the MSF signals the first codeblock of the first superframe (SSN = "0"), and the "1" value **1924** of the MSF signals the first codeblock of the second superframe (SSN = "0"). Further, the "1" values of the MSF signal an SSN of "0," whereby a receiver is able to synchronize its SSN counter to "0," and the receiver can increment the counter with every codeblock, and thereby provide an explicit SSN to the terminal. Also, as specified above, the SIDs reflect the terminal classes intended to decode the codeblocks at the positions of the respective SSNs, where the SIDs of value "0" signify broadcast codeblocks intended to be decoded by the universe of terminals on the respective carrier. Moreover, as depicted, there may be "0" SIDs reflecting broadcast codeblocks that do not contain the timeplan (e.g., SIDs **1926** and **1928).** The timeplan is signaled as being contained in only the codeblocks at the first position of a superframe (corresponding to the MSF = "1," the SSN = "0" and the SID = "0").

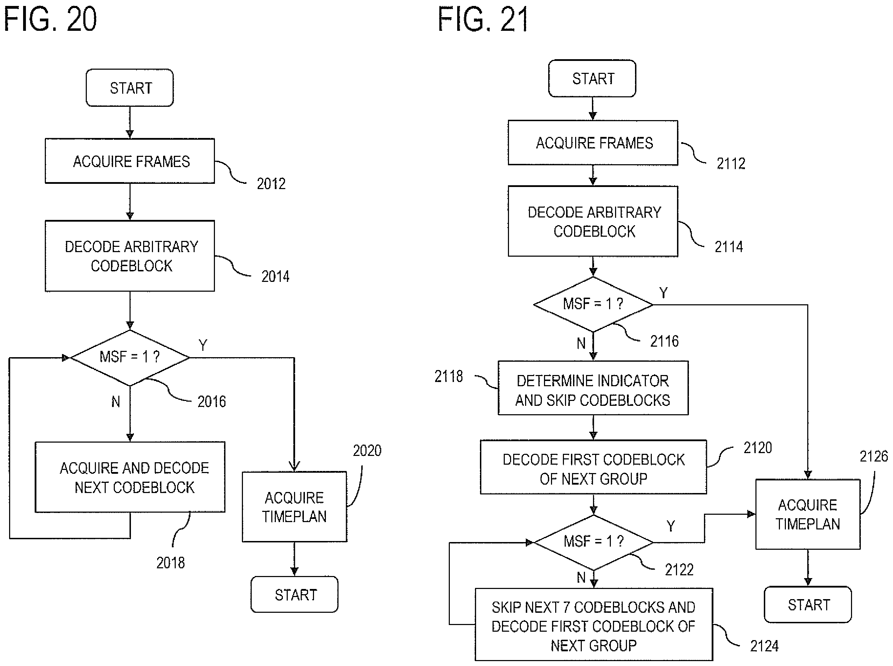

Further, with respect to acquisition of the timeplan, in the case where the timeplan is transmitted in the first codeblock position (SSN = "0") of every superframe, **FIG. 20** reflects a method for acquiring the timeplan using the MSF **1812.** The method starts, as with the method of **FIG. 13****,** by acquiring the frames and choosing and decoding an arbitrary codeblock **(S2012** and **S2014).** At step **S2016,** the receiver determines whether the MSF = "1." If the MSF is not "1," the receiver acquires and decodes the next codeblock (based on its decode **rate)(S2018),** and returns to step **S2016.** If the MSF = "1," then the receiver acquires the timeplan from the data field of the codeblock **(S2020).** Once the receiver identifies the first codeblock of a superframe based on a "1" value of the MSF, the receiver knows that the respective codeblock contains the timeplan. Alternatively, in a case where the timeplan is not located in the first codeblock of each superframe, with respect to the timeplan acquisition method of **FIG. 13****,** while searching for the timeplan in every decoded codeblock, the receiver can concurrently determine the MSF value of each codeblock, and, once an MSF value of "1" is determined (signaling the first codeblock of the next superframe), the receiver can synchronize its counter to coincide with the SSNs.

In this embodiment, however, the use of the one bit MSF, however, raises issues with respect to timeplan acquisition for slower rate terminals. For example, referring back to the timeplan acquisition method of **FIG. 13****,** based on the code rate, the receiver decodes a codeblock at a regular interval (e.g., in the case of the 2/4 code rate, the receiver decodes every other codeblock, and in the case of a 1/4 code rate, the receiver decodes every fourth codeblock). Again, therefore, for a 2/4 code rate receiver, the terminal may have to wait two whole superframes before acquiring the timeplan, and for a 1/4 code rate receiver, the terminal may have to wait four whole superframes before acquiring the timeplan. For a slower code rate terminal, such as with a 1/16 code rate receiver, the terminal decodes every sixteenth codeblock, and thus, worst case, that terminal may have to wait 16 superframes before acquiring the timeplan. Moreover, with respect to the timeplan acquisition method of **FIG. 14****,** when the receiver decodes any given codeblock, because with this protocol the SSN is not expressly coded in the codeblock header, the receiver may have no knowledge of the SSN or position of the codeblock. So, when acquiring and decoding the initial code block, the receiver would have no way of determining (based on the SSN) how many codeblocks would be required to be skipped to reach the beginning of the next superframe (e.g., in the case where the timeplan would be contained in the codeblock of the first position of each new superframe).

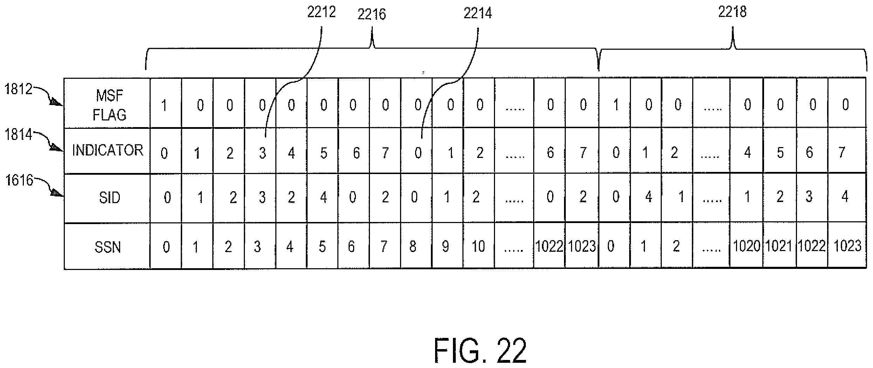

Accordingly, based on a further exemplary embodiment, an indicator **1814** is provided as to a number of codeblocks that may be skipped (e.g., as depicted in **FIG. 18****).** According to this embodiment, the indicated number of codeblocks that may be skipped is not necessarily the number required to reach the beginning of the next superframe, but rather a number of codeblocks that can be skipped based on a number of bits available for the indicator **1814.** For example, as depicted in **FIG. 18****,** in the foregoing case where the SID **1616** is coded by four bits of the available header byte (MATYPE-2), and the MSF **1812** uses one bit, an additional three bits is left for the indicator **1814.** With reference to **FIG. 22****,** the indicator provides the three least significant bits of the SSN, and thereby provides an indication of where the current codeblock is located, within a group of 8 SSNs or codeblocks (e.g., SSN XXXXXXX000 to SSN XXXXXXX111). As with **FIG. 19****,** it again should be noted that, in **FIG.** 22, the SSN is not explicitly coded in the codeblocks, but is shown to illustrate the codeblock SSN position within the superframe, and as may be tracked by the terminal via the counter **1714.** The MSF **1812** and SID **1616** are associated with two 1024 codeblock superframes, the first corresponding to SSNs 0-1023 **(2216)** and the second corresponding to SSNs 0-1023 **2218).**

Accordingly, based on these least significant three bits of the SSN, the receiver can determine the number of codeblocks required to be skipped to reach the first codeblock of the next group of 8 codeblocks. For example, starting with **2212,** where the indicator bits = "3," the receiver determines that it must skip the next four codeblocks to reach the first codeblock of the next group of eight codeblocks (indicator bits = "0" **2214).** Then, from there, the receiver would know that it can successively skip the next seven codeblocks to reach the first codeblock of each successive group of eight codeblocks. In that manner, once the first codeblock (the indicator **1814** bits = "0") of a current group of eight codeblocks is determined, the receiver would be required to only decode one out of every successive eight codeblocks until it acquires the timeplan at the first codeblock of the next superframe (e.g., again, where the timeplan would be contained in the codeblock of the first position of each new superframe). Additionally, while decoding one of every successive group of eight codeblocks (the 0^{th} SSN of each particular group of eight codeblocks), concurrently, the receiver can be looking for an MSF flag value of "1" to locate the first codeblock of the next superframe. Hence reducing processing and power requirements for the terminal.

Based on this indicator **1814** and the MSF **1812,** a method for acquiring the timeplan is illustrated in **FIG. 21****.** Again, the process begins with the acquisition of the frames and choosing and decoding an arbitrary codeblock **(S2112** and **S2114),** and a determination as to whether the MSF = "1" **(S2116).** If the MSF is not "1," then the receiver determines the indicator **1814,** and based on the indicator, determines the number of codeblocks to skip to reach the first codeblock of the next group of 8 codeblocks **(S2118).** The receiver then decodes the codeblock at the first position of the next group of 8 codeblocks **(S2120).** Again, the receiver determines whether the MSF = "1" **(S2122).** If the MSF is not "1," then the receiver skips the next 7 codeblocks, and decodes the codeblock at the first position of the next group of 8 codeblocks **(S2124),** and returns to step **S2122.** If, at either of steps **S2116** or **S2122,** the MSF = "1," then the receiver acquires the timeplan from the data field of the codeblock **(S2126).**

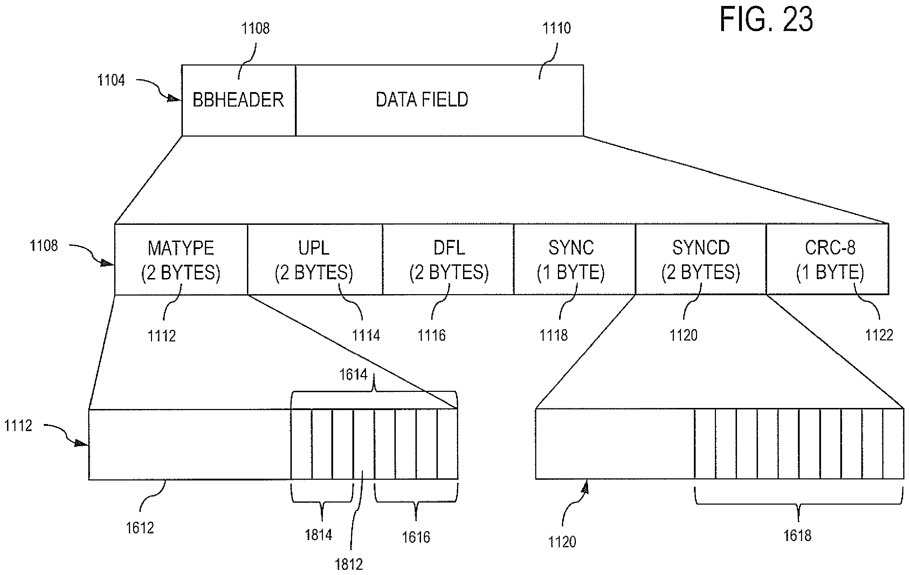

Additionally, according to a further exemplary embodiment, in the interactive mode, when utilizing the continuous GSE protocol, where the SID **1616** and SSN **1618** are both explicitly signaled, as depicted in **FIG. 16****.** According to this embodiment, however, although the SID and SSN are both explicitly signaled, the MSF **1812** and indicator **1814** may also be signaled, as depicted in **FIG. 23****.** In this manner, uniformity can be maintained between the broadcast modes of **FIGs. 18****,** **20** and **21****.**

**FIG. 24** illustrates an arrangement **2400** of a plurality of superframes, in accordance with an aspect of the present invention. Arrangement **2400** of a plurality of superframes includes a row **2402** of superframes, a row **2404** of SSNs and a row **2406** of SIDs. Row **2402** includes N-2 superframe **2408,** N-1 superframe **2410,** N superframe **2412,** and N+1 superframe **2414,** where TP(N) is the timeplan for superframe N. Row **2404** lists the SSNs within each superframe, whereas row **2406** lists the SIDs within each superframe. Superframe **2408** includes a plurality of frames with a sampling sequence number 0 (SSN 0) denoted as **2416** presented with an SID having a value "1," as indicated by **2418.** Sequence number **2416** may perform the same function as SSN **1202** discussed above with reference to **FIG. 12****.** SID **2418** may perform the same function as SID **1204** discussed above with reference to **FIG. 12****.**

Due to de-multiplexing of codeblocks as described with reference to **FIGs. 3-9****,** updating a timeplan for a receiver may require several codeblocks to perform. As a result of requiring several codeblocks for updating a timeplan, synchronization of timeplans with received information may be performed by transmitting updated timeplan information prior to implementation of the updated timeplan. Furthermore, timeplan **1200 (****FIG. 12****)** may be communicated via a codeblock, for example a shared codeblock. The codeblock location for transmission of timeplan **1200** with respect to a superframe, for example superframe **2408,** may repeatedly be transmitted via the same codeblock, for example outroute codeblock **402 (****FIG. 4****).** For example, a system seeking to update a receiver timeplan during frame x may begin transmitting updated timeplan information during the transmission of frame x-2, or two frames prior to implementation of the new timeplan. Prior to frame x, a receiver may continue to operate based upon the timeplan transmitted prior to frame x-2. Furthermore, once a timeplan has been transmitted to a receiver, the receiver may operate based on the updated timeplan (e.g. frame x).

In accordance with aspects of the present invention, a plurality of outroute data streams may be multiplexed at the transmitter side, thereby achieving multiple times greater data capacity than existing transmitters. Similarly, a received multiplexed data stream may be demultiplexed at the receiver side in order to achieve greater data capacity. The timeplan according to exemplary embodiments: provides a flexible means of providing a multiplexing scheme to allow terminals to operate on wideband signals without requiring the decoder to operate at full speed; provides multiple SIDs that a terminal could decode, allowing the transmission of broadcast and system information only once to all terminals; provides the ability to provide differentiated services and to provide multicast streams depending on communities of interest; provides a configurable R/S multiplexing scheme, rather than a fixed 1/S scheme; provides the ability for multiclass terminal operation, whereby terminals with faster decoder rates could decode multiple SIDs assigned to it, whereas slower terminals decode only the shared and a single SID - which would not be possible with a traditional fixed 1/N multiplexing scheme; provides for scaling of the amount of shared channel capacity depending on the needs of the system, rather than proving a fixed 1/N throughput; and provides for system-wide, dynamic modification of the multiplexing scheme through dynamic updates of the timeplans - e.g., different timeplans depending on the time of day traffic requirements.

In the preceding specification, various embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense.

## Claims

1. A method, comprising:
decoding, by a processing device, a one codeblock (402, 404, 406, 408, 410, 700, 1000) of a plurality of codeblocks (402, 404, 406, 408, 410, 700, 1000) within a multiplexed datastream (300, 400,1100), wherein each codeblock (402,404,406, 408, 410, 700, 1000) includes a flag that indicates whether the codeblock (402, 404, 406, 408, 410, 700, 1000) contains a timeplan (1200), and the timeplan (1200) signifies a multiplexing structure of the datastream (300, 400,1100);
determining whether the flag of the one codeblock (402, 404, 406, 408, 410, 700, 1000) indicates that the one codeblock (402, 404, 406, 408, 410, 700, 1000) contains the timeplan (1200); and
if it is determined that the one codeblock (402, 404, 406, 408, 410, 700, 1000) contains the timeplan (1200), the method further comprises acquiring the timeplan (1200);
in response to a determination that the one codeblock (402, 404, 406, 408, 410, 700, 1000) does not contain the timeplan (1200), determining a first subsequent codeblock (402, 404, 406, 408, 410, 700, 1000) of the plurality of codeblocks (402, 404, 406, 408, 410, 700, 1000);
decoding, by the processing device, the first subsequent codeblock (402, 404, 406, 408, 410, 700, 1000); and
determining whether the flag of the first subsequent codeblock (402, 404, 406, 408, 410, 700, 1000) indicates that the first subsequent codeblock (402, 404, 406, 408, 410, 700, 1000) contains the timeplan (1200); and
if it is determined that the first subsequent codeblock (402, 404, 406, 408, 410, 700, 1000) contains the timeplan (1200), the method further comprises acquiring the timeplan (1200),wherein each codeblock (402, 404, 406, 408, 410, 700, 1000) further includes a sequence number indicator that indicates a sequence position of the one codeblock (402, 404, 406, 408, 410, 700, 1000) within a first group of the plurality of codeblocks (402, 404, 406, 408, 410, 700, 1000), **characterized in that**
the determination of the first subsequent codeblock (402, 404, 406, 408, 410, 700, 1000) is based on a decode rate of the processing device and the sequence number indicator.

2. A method according to claim 1, wherein each codeblock (402, 404, 406, 408, 410, 700, 1000) further includes a class indicator indicating a communication device class that is designated to decode the codeblock (402, 404, 406, 408, 410, 700, 1000).

3. A method according to claim 2, wherein each codeblock (402, 404, 406, 408, 410, 700, 1000) further includes a sequence number specifying a sequence position of the codeblock (402, 404, 406, 408, 410, 700, 1000) within a superframe (2408, 2410, 2412, 2414) of the multiplexed datastream (300, 400,1100).

4. A method according to any of claims 1 to 3, wherein,
the first group comprises a number of codeblocks (402, 404, 406, 408, 410, 700, 1000) based on a number of bits of the sequence number indicator, and
the determination of the first subsequent codeblock (402, 404, 406, 408, 410, 700, 1000) comprises skipping, based on the sequence number indicator, to a first codeblock (402, 404, 406, 408, 410, 700, 1000) of a second group of codeblocks (402, 404, 406, 408, 410, 700, 1000), wherein the second group comprises a number of codeblocks (402, 404, 406, 408, 410, 700, 1000) equal to the number of codeblocks (402, 404, 406, 408, 410, 700, 1000) of the first group.

5. A method according to claim 4, further comprising:
in response to a determination that the first subsequent codeblock (402, 404, 406, 408, 410, 700, 1000) does not contain the timeplan (1200), determining a second subsequent codeblock (402, 404, 406, 408, 410, 700, 1000) of the plurality of codeblocks (402, 404, 406, 408, 410, 700, 1000), wherein the determination of the second subsequent codeblock (402, 404, 406, 408, 410, 700, 1000) comprises skipping, based on the number of codeblocks (402, 404, 406, 408, 410, 700, 1000) of the second group, to a first codeblock (402, 404, 406, 408, 410, 700, 1000) of a third group of codeblocks (402, 404, 406, 408, 410, 700, 1000);
decoding, by the processing device, the second subsequent codeblock (402, 404, 406, 408, 410, 700, 1000); and
determining whether the flag of the second subsequent codeblock (402, 404, 406, 408, 410, 700, 1000) indicates that the second subsequent codeblock (402, 404, 406, 408, 410, 700, 1000) contains the timeplan (1200); and
if it is determined that the second subsequent codeblock (402, 404, 406, 408, 410, 700, 1000) contains the timeplan (1200), the method further comprises acquiring the timeplan (1200).

6. A method according to any of claims 1 to 5, wherein each codeblock (402, 404, 406, 408, 410, 700, 1000) is associated with a sequence number signifying a sequence position of the codeblock (402, 404, 406, 408, 410, 700, 1000) within a superframe (2408, 2410, 2412, 2414) of the multiplexed datastream (300, 400,1100), and the flag further indicates whether the sequence number of the one codeblock (402, 404, 406, 408, 410, 700, 1000) signifies that the one codeblock (402, 404, 406, 408, 410, 700, 1000) is of a first position within the superframe (2408, 2410, 2412, 2414), and wherein the method further comprises:
resetting a counter for tracking the sequence number of each of the codeblocks (402, 404, 406, 408, 410, 700, 1000) in response to a determination that the one codeblock (402, 404, 406, 408, 410, 700, 1000) contains the timeplan (1200).

7. A method according to any of claims 1 to 6, wherein,
the codeblocks (402, 404, 406, 408, 410, 700, 1000) are organized within one or more superframes (2408, 2410, 2412, 2414) within the datastream (300, 400,1100),
each codeblock (402, 404, 406, 408, 410, 700, 1000) is of a sequence number indicating a position of the codeblock (402, 404, 406, 408, 410, 700, 1000) within a respective superframe (2408, 2410, 2412, 2414), and
the timeplan (1200) signifies the sequence number of each codeblock (402, 404, 406, 408, 410, 700, 1000) and a respective class indicator indicating a communication device class that is designated to decode the respective codeblock (402, 404, 406, 408, 410, 700, 1000).

8. A method according to claim 7, wherein the timeplan (1200) is transmitted in at least one codeblock (402, 404, 406, 408, 410, 700, 1000) within each superframe (2408, 2410, 2412, 2414).

9. A method according to claim 7, wherein the timeplan (1200) is transmitted in one codeblock (402, 404, 406, 408, 410, 700, 1000) within each superframe (2408, 2410, 2412, 2414), and the codeblock (402, 404, 406, 408, 410, 700, 1000) containing the timeplan (1200) is of a same sequence number of each superframe (2408, 2410, 2412, 2414).

10. A method according to any of claims 1 to 9, wherein the timeplan (1200) is periodically transmitted within the codeblocks (402, 404, 406, 408, 410, 700, 1000) of the multiplexed datastream (300, 400,1100).

11. A method according to any of claims 1 to 10, wherein the flag is contained within a header of each codeblock (402, 404, 406, 408, 410, 700, 1000).

12. A method according to any of claims 1 to 11, wherein the codeblocks (402, 404, 406, 408, 410, 700, 1000) are formatted in accordance with a DVB-S2 protocol, and the flag is contained within a baseband header of each codeblock (402, 404, 406, 408, 410, 700, 1000).

13. An apparatus, comprising:
a receiver module (500, 600, 900) configured to receive a multiplexed datastream (300, 400,1100) comprising a plurality of codeblocks (402, 404, 406, 408, 410, 700, 1000) ; and
a processor device configured to,
decode a one codeblock (402, 404, 406, 408, 410, 700, 1000) of the plurality of codeblocks (402, 404, 406, 408, 410, 700, 1000), wherein each codeblock (402, 404, 406, 408, 410, 700, 1000) includes a flag that indicates whether the codeblock (402, 404, 406, 408, 410, 700, 1000) contains a timeplan (1200), and the timeplan (1200) signifies a multiplexing structure of the datastream (300, 400,1100),
determine whether the flag of the one codeblock (402, 404, 406, 408, 410, 700, 1000) indicates that the one codeblock (402, 404, 406, 408, 410, 700, 1000) contains the timeplan (1200), and
acquire the timeplan (1200) from the one codeblock (402, 404, 406, 408, 410, 700, 1000) if it is determined that the one codeblock (402, 404, 406, 408, 410, 700, 1000) contains the timeplan (1200), wherein, in response to a determination that the one codeblock (402, 404, 406, 408, 410, 700, 1000) does not contain the timeplan (1200), the processor device is further configured to:
determine a first subsequent codeblock (402, 404, 406, 408, 410, 700, 1000) of the plurality of codeblocks (402, 404, 406, 408, 410, 700, 1000);
decode the first subsequent codeblock (402, 404, 406, 408, 410, 700, 1000);
determine whether the flag of the first subsequent codeblock (402, 404, 406, 408, 410, 700, 1000) indicates that the first subsequent codeblock (402, 404, 406, 408, 410, 700, 1000) contains the timeplan (1200); and
acquire the timeplan (1200) from the first subsequent codeblock (402, 404, 406, 408, 410, 700, 1000) if it is determined that the first subsequent codeblock (402, 404, 406, 408, 410, 700, 1000) contains the timeplan (1200),wherein each codeblock (402, 404, 406, 408, 410, 700, 1000) further includes a sequence number indicator that indicates a sequence position of the one codeblock (402, 404, 406, 408, 410, 700, 1000) within a first group of the plurality of codeblocks (402, 404, 406, 408, 410, 700, 1000),
**characterized in that**
the processor device determines the first subsequent codeblock (402, 404, 406, 408, 410, 700, 1000) based on a decode rate of the processor device and the sequence number indicator.

14. An apparatus according to claim 13, wherein each codeblock (402, 404, 406, 408, 410, 700, 1000) further includes a class indicator indicating a communication device class that is designated to decode the codeblock (402, 404, 406, 408, 410, 700, 1000).

15. An apparatus according to claim 14, wherein each codeblock (402, 404, 406, 408, 410, 700, 1000) further includes a sequence number specifying a sequence position of the codeblock (402, 404, 406, 408, 410, 700, 1000) within a superframe (2408, 2410, 2412, 2414) of the multiplexed datastream (300, 400,1100).

16. An apparatus according to claim 13, wherein,
the first group comprises a number of codeblocks (402, 404, 406, 408, 410, 700, 1000) based on a number of bits of the sequence number indicator, and
the processor device determines the first subsequent codeblock (402, 404, 406, 408, 410, 700, 1000) by skipping, based on the sequence number indicator, to a first codeblock (402, 404, 406, 408, 410, 700, 1000) of a second group of codeblocks (402, 404, 406, 408, 410, 700, 1000), wherein the second group comprises a number of codeblocks (402, 404, 406, 408, 410, 700, 1000) equal to the number of codeblocks (402, 404, 406, 408, 410, 700, 1000) of the first group.

17. An apparatus according to claim 16, wherein, in response to a determination that the first subsequent codeblock (402, 404, 406, 408, 410, 700, 1000) does not contain the timeplan (1200), the processor device is further configured to:
determine a second subsequent codeblock (402, 404, 406, 408, 410, 700, 1000) of the plurality of codeblocks (402, 404, 406, 408, 410, 700, 1000), wherein the processor device determines the second subsequent codeblock (402, 404, 406, 408, 410, 700, 1000) by skipping, based on the number of codeblocks (402, 404, 406, 408, 410, 700, 1000) of the second group, to a first codeblock (402, 404, 406, 408, 410, 700, 1000) of a third group of codeblocks (402, 404, 406, 408, 410, 700, 1000);
decode the second subsequent codeblock (402, 404, 406, 408, 410, 700, 1000);
determine whether the flag of the second subsequent codeblock (402, 404, 406, 408, 410, 700, 1000) indicates that the second subsequent codeblock (402, 404, 406, 408, 410, 700, 1000) contains the timeplan (1200); and
acquire the timeplan (1200) from the second subsequent codeblock (402, 404, 406, 408, 410, 700, 1000) if it is determined that the second subsequent codeblock (402, 404, 406, 408, 410, 700, 1000) contains the timeplan (1200).

18. An apparatus according to any of claims 13 to 17, wherein each codeblock (402, 404, 406, 408, 410, 700, 1000) is associated with a sequence number signifying a sequence position of the codeblock (402, 404, 406, 408, 410, 700, 1000) within a superframe (2408, 2410, 2412, 2414) of the multiplexed datastream (300, 400,1100), and the flag further indicates whether the sequence number of the one codeblock (402, 404, 406, 408, 410, 700, 1000) signifies that the one codeblock (402, 404, 406, 408, 410, 700, 1000) is of a first position within the superframe (2408, 2410, 2412, 2414), and wherein the processor device is further configured to:
reset a counter for tracking the sequence number of each of the codeblocks (402, 404, 406, 408, 410, 700, 1000) in response to a determination that the one codeblock (402, 404, 406, 408, 410, 700, 1000) contains the timeplan (1200).

19. An apparatus according to any of claims 13 to 18, wherein,
the codeblocks (402, 404, 406, 408, 410, 700, 1000) are organized within one or more superframes (2408, 2410, 2412, 2414) within the datastream (300, 400,1100),
each codeblock (402, 404, 406, 408, 410, 700, 1000) is of a sequence number indicating a position of the codeblock (402, 404, 406, 408, 410, 700, 1000) within a respective superframe (2408, 2410, 2412, 2414), and
the timeplan (1200) signifies the sequence number of each codeblock (402, 404, 406, 408, 410, 700, 1000) and a respective class indicator indicating a communication device class that is designated to decode the respective codeblock (402, 404, 406, 408, 410, 700, 1000).

20. An apparatus according to claim 19, wherein the timeplan (1200) is transmitted in at least one codeblock (402, 404, 406, 408, 410, 700, 1000) within each superframe (2408, 2410, 2412, 2414).

21. An apparatus according to claim 19, wherein the timeplan (1200) is transmitted in one codeblock (402, 404, 406, 408, 410, 700, 1000) within each superframe (2408, 2410, 2412, 2414), and the codeblock (402, 404, 406, 408, 410, 700, 1000) containing the timeplan (1200) is of a same sequence number of each superframe (2408, 2410, 2412, 2414).

22. An apparatus according to any of claim 13 to 21, wherein the timeplan (1200) is periodically transmitted within the codeblocks (402, 404, 406, 408, 410, 700, 1000) of the multiplexed datastream (300, 400,1100).

23. An apparatus according to any of claims 13 to 22, wherein the flag is contained within a header of each codeblock (402, 404, 406, 408, 410, 700, 1000).

24. An apparatus according to any of claims 13 to 23, wherein the codeblocks (402, 404, 406, 408, 410, 700, 1000) are formatted in accordance with a DVB-S2 protocol, and the flag is contained within a baseband header of each codeblock (402, 404, 406, 408, 410, 700, 1000).

25. Digital storage medium with control signals electronically readable from the digital storage medium, which interact with a programmable computer or digital signal processor in a manner that all steps of the method according to any of claims 1 to 12 are performed.

26. Computer program with program-code-means configured to perform all steps of any of claims 1 to 12, when the program is performed on a programmable computer or a digital signal processor.

## Patentansprüche

1. Ein Verfahren, das Folgendes umfasst: Dekodieren eines Codeblocks (402, 404, 406, 408, 410, 700, 1000) durch eine Verarbeitungsvorrichtung aus einer Vielzahl von Codeblöcken (402, 404, 406, 408, 410, 700, 1000) innerhalb eines gemultiplexten Datenstroms (300, 400, 1100), wobei jeder Codeblock (402, 404, 406, 408, 410, 700, 1000) ein Flag enthält, das anzeigt, ob der Codeblock (402, 404, 406, 408, 410, 700, 1000) einen Zeitplan (1200) enthält, und der Zeitplan (1200) eine Multiplexstruktur des Datenstroms (300, 400, 1100) kennzeichnet;
Bestimmen, ob das Flag des einen Codeblocks (402, 404, 406, 408, 410, 700, 1000) anzeigt, dass der eine Codeblock (402, 404, 406, 408, 410, 700, 1000) den Zeitplan (1200) enthält; und
wenn festgestellt wird, dass der eine Codeblock (402, 404, 406, 408, 410, 700, 1000) den Zeitplan (1200) enthält, umfasst das Verfahren ferner das Erfassen des Zeitplans (1200);
als Reaktion auf eine Feststellung, dass der eine Codeblock (402, 404, 406, 408, 410, 700, 1000) den Zeitplan (1200) nicht enthält, Bestimmen eines ersten nachfolgenden Codeblocks (402, 404, 406, 408, 410, 700, 1000) der Vielzahl von Codeblöcken (402, 404, 406, 408, 410, 700, 1000);
Dekodieren des ersten nachfolgenden Codeblocks (402, 404, 406, 408, 410, 700, 1000) durch die Verarbeitungsvorrichtung; und
Bestimmen, ob das Flag des ersten nachfolgenden Codeblocks (402, 404, 406, 408, 410, 700, 1000) anzeigt, dass der erste nachfolgende Codeblock (402, 404, 406, 408, 410, 700, 1000) den Zeitplan (1200) enthält; und
wenn festgestellt wird, dass der erste nachfolgende Codeblock (402, 404, 406, 408, 410, 700, 1000) den Zeitplan (1200) enthält, umfasst das Verfahren ferner das Erfassen des Zeitplans (1200), wobei jeder Codeblock (402, 404, 406, 408, 410, 700, 1000) ferner einen Sequenznummernindikator enthält, der eine Sequenzposition des einen Codeblocks (402, 404, 406, 408, 410, 700, 1000) innerhalb einer ersten Gruppe der Vielzahl von Codeblöcken (402, 404, 406, 408, 410, 700, 1000) anzeigt,
**dadurch gekennzeichnet, dass**
die Bestimmung des ersten nachfolgenden Codeblocks (402, 404, 406, 408, 410, 700, 1000) auf einer Dekodierrate der Verarbeitungseinrichtung und dem Sequenznummernindikator basiert.

2. Ein Verfahren nach Anspruch 1, wobei jeder Codeblock (402, 404, 406, 408, 410, 700, 1000) ferner einen Klassenindikator enthält, der eine Kommunikationsgeräteklasse anzeigt, die zum Dekodieren des Codeblocks (402, 404, 406, 408, 410, 700, 1000) bestimmt ist.

3. Ein Verfahren nach Anspruch 2, wobei jeder Codeblock (402, 404, 406, 408, 410, 700, 1000) ferner eine Sequenznummer enthält, die eine Sequenzposition des Codeblocks (402, 404, 406, 408, 410, 700, 1000) in einem Superframe (2408, 2410, 2412, 2414) des gemultiplexten Datenstroms (300, 400, 1100) angibt.

4. Ein Verfahren nach einem der Ansprüche 1 bis 3, wobei,
die erste Gruppe eine Anzahl von Codeblöcken (402, 404, 406, 408, 410, 700, 1000) umfasst, die auf einer Anzahl von Bits des Sequenznummernindikators basiert, und die Bestimmung des ersten nachfolgenden Codeblocks (402, 404, 406, 408, 410, 700, 1000) das Überspringen zu einem ersten Codeblock (402, 404, 406, 408, 410, 700, 1000) einer zweiten Gruppe von Codeblöcken (402, 404, 406, 408, 410, 700, 1000) basierend auf dem Sequenznummernindikator umfasst, wobei die zweite Gruppe eine Anzahl von Codeblöcken (402, 404, 406, 408, 410, 700, 1000) umfasst, die gleich der Anzahl von Codeblöcken (402, 404, 406, 408, 410, 700, 1000) der ersten Gruppe ist.

5. Ein Verfahren nach Anspruch 4, ferner umfassend:
als Reaktion auf eine Bestimmung, dass der erste nachfolgende Codeblock (402, 404, 406, 408, 410, 700, 1000) den Zeitplan (1200) nicht enthält, Bestimmen eines zweiten nachfolgenden Codeblocks (402, 404, 406, 408, 410, 700, 1000) aus der Vielzahl von Codeblöcken (402, 404, 406, 408, 410, 700, 1000), wobei die Bestimmung des zweiten nachfolgenden Codeblocks (402, 404, 406, 408, 410, 700, 1000) das Überspringen zu einem ersten Codeblock (402, 404, 406, 408, 410, 700, 1000) einer dritten Gruppe von Codeblöcken (402, 404, 406, 408, 410, 700, 1000) basierend auf der Anzahl der Codeblöcke (402, 404, 406, 408, 410, 700, 1000) der zweiten Gruppe umfasst;
Dekodieren des zweiten nachfolgenden Codeblocks (402, 404, 406, 408, 410, 700, 1000) durch die Verarbeitungsvorrichtung; und
Bestimmen, ob das Flag des zweiten nachfolgenden Codeblocks (402, 404, 406, 408, 410, 700, 1000) anzeigt, dass der zweite nachfolgende Codeblock (402, 404, 406, 408, 410, 700, 1000) den Zeitplan (1200) enthält; und
wenn festgestellt wird, dass der zweite nachfolgende Codeblock (402, 404, 406, 408, 410, 700, 1000) den Zeitplan (1200) enthält, umfasst das Verfahren ferner das Erfassen des Zeitplans (1200).

6. Ein Verfahren nach einem der Ansprüche 1 bis 5, wobei jeder Codeblock (402, 404, 406, 408, 410, 700, 1000) mit einer Sequenznummer verknüpft ist, die eine Sequenzposition des Codeblocks (402, 404, 406, 408, 410, 700, 1000) innerhalb eines Superframes (2408, 2410, 2412, 2414) des gemultiplexten Datenstroms (300, 400, 1100) bezeichnet, und wobei das Flag weiterhin anzeigt, ob die Sequenznummer des einen Codeblocks (402, 404, 406, 408, 410, 700, 1000) bedeutet, dass der eine Codeblock (402, 404, 406, 408, 410, 700, 1000) eine erste Position innerhalb des Superframes (2408, 2410, 2412, 2414) einnimmt, und wobei das Verfahren weiterhin umfasst:
Zurücksetzen eines Zählers zum Verfolgen der Sequenznummer jedes der Codeblöcke (402, 404, 406, 408, 410, 700, 1000) in Reaktion auf eine Bestimmung, dass der eine Codeblock (402, 404, 406, 408, 410, 700, 1000) den Zeitplan (1200) enthält.

7. Ein Verfahren nach einem der Ansprüche 1 bis 6, wobei
die Codeblöcke (402, 404, 406, 408, 410, 700, 1000) innerhalb eines oder mehrerer Superframes (2408, 2410, 2412, 2414) innerhalb des Datenstroms (300, 400,1100) organisiert sind,
jeder Codeblock (402, 404, 406, 408, 410, 700, 1000) eine Sequenznummer hat, die eine Position des Codeblocks (402, 404, 406, 408, 410, 700, 1000) eines jeweiligen Superframes (2408, 2410, 2412, 2414) anzeigt, und
der Zeitplan (1200) die Sequenznummer jedes Codeblocks (402, 404, 406, 408, 410, 700, 1000) und einen jeweiligen Klassenindikator angibt, der eine Kommunikationsgeräteklasse angibt, die dazu bestimmt ist, den jeweiligen Codeblock (402, 404, 406, 410, 700, 1000) zu dekodieren.

8. Ein Verfahren nach Anspruch 7, wobei der Zeitplan (1200) in mindestens einem Codeblock (402, 404, 406, 408, 410, 700, 1000) in jedem Superframe (2408, 2410, 2412, 2414) übertragen wird.

9. Ein Verfahren nach Anspruch 7, wobei der Zeitplan (1200) in einem Codeblock (402, 404, 406, 408, 410, 700, 1000) innerhalb jedes Superframes (2408, 2410, 2412, 2414) übertragen wird, und wobei der Codeblock (402, 404, 406, 408, 410, 700, 1000), der den Zeitplan (1200) enthält, die gleiche Sequenznummer jedes Superframes (2408, 2410, 2412, 2414) aufweist.

10. Ein Verfahren nach einem der Ansprüche 1 bis 9, wobei der Zeitplan (1200) periodisch innerhalb der Codeblöcke (402, 404, 406, 408, 410, 700, 1000) des gemultiplexten Datenstroms (300, 400, 1100) übertragen wird.

11. Ein Verfahren nach einem der Ansprüche 1 bis 10, wobei das Flag in einem Header jedes Codeblocks (402, 404, 406, 408, 410, 700, 1000) enthalten ist.

12. Ein Verfahren nach einem der Ansprüche 1 bis 11, wobei die Codeblöcke (402, 404, 406, 408, 410, 700, 1000) in Übereinstimmung mit einem DVB-S2-Protokoll formatiert sind und das Flag in einem Basisband-Header jedes Codeblocks (402, 404, 406, 408, 410, 700, 1000) enthalten ist.

13. Eine Vorrichtung, die Folgendes umfasst:
ein Empfängermodul (500, 600, 900), das zum Empfangen eines gemultiplexten Datenstroms (300, 400, 1100) eingerichtet ist, der eine Vielzahl von Codeblocks (402, 404, 406, 408, 410, 700, 1000) umfasst; und
eine Prozessorvorrichtung, die dazu eingerichtet ist,
einen Codeblock (402, 404, 406, 408, 410, 700, 1000) aus der Vielzahl von Codeblöcken (402, 404, 406, 408, 410, 700, 1000) zu dekodieren, wobei jeder Codeblock (402, 404, 406, 408, 410, 700, 1000) ein Flag enthält, das anzeigt, ob der Codeblock (402, 404, 406, 408, 410, 700, 1000) einen Zeitplan (1200) enthält, und
der Zeitplan (1200) eine Multiplexstruktur des Datenstroms (300, 400, 1100) kennzeichnet,
zu bestimmen, ob das Flag des einen Codeblocks (402, 404, 406, 408, 410, 700, 1000) anzeigt, dass der eine Codeblock (402, 404, 406, 408, 410, 700, 1000) den Zeitplan (1200) enthält, und
den Zeitplan (1200) aus dem einen Codeblock (402, 404, 406, 408, 410, 700, 1000) zu erfassen, wenn festgestellt wird, dass der eine Codeblock (402, 404, 406, 408, 410, 410, 700, 1000) den Zeitplan (1200) enthält, wobei als Reaktion auf eine Bestimmung, dass der eine Codeblock (402, 404, 406, 408, 410, 700, 1000) den Zeitplan (1200) nicht enthält, die Prozessorvorrichtung ferner dazu eingerichtet ist:
einen ersten nachfolgenden Codeblocks (402, 404, 406, 408, 410, 700, 1000) aus der Vielzahl von Codeblöcken (402, 404, 406, 408, 410, 700, 1000) zu bestimmen; den ersten nachfolgenden Codeblock (402, 404, 406, 408, 410, 700, 1000) zu dekodieren;
zu bestimmen, ob das Flag des ersten nachfolgenden Codeblocks (402, 404, 406, 408, 410, 700, 1000) anzeigt, dass der erste nachfolgende Codeblock (402, 404, 406, 408, 410, 700, 1000) den Zeitplan (1200) enthält; und
den Zeitplans (1200) aus dem ersten nachfolgenden Codeblock (402, 404, 406, 408, 410, 700, 1000) zu erfassen, wenn festgestellt wird, dass der erste nachfolgende Codeblock (402, 404, 406, 408, 410, 700, 1000) den Zeitplan (1200) enthält, wobei jeder Codeblock (402, 404, 406, 408, 410, 700, 1000) ferner einen Sequenznummernindikator enthält, der eine Sequenzposition des einen Codeblocks (402, 404, 406, 408, 410, 700, 1000) innerhalb einer ersten Gruppe der Vielzahl von Codeblöcken (402, 404, 406, 408, 410, 700, 1000) anzeigt,
**dadurch gekennzeichnet, dass**
die Prozessorvorrichtung den ersten nachfolgenden Codeblock (402, 404, 406, 408, 410, 700, 1000) basierend auf einer Dekodierrate der Prozessorvorrichtung und dem Sequenznummernindikator bestimmt.

14. Eine Vorrichtung nach Anspruch 13, wobei jeder Codeblock (402, 404, 406, 408, 410, 700, 1000) ferner einen Klassenindikator enthält, der eine Kommunikationsgeräteklasse anzeigt, die zum Dekodieren des Codeblocks (402, 404, 406, 408, 410, 700, 1000) bestimmt ist.

15. Eine Vorrichtung nach Anspruch 14, wobei jeder Codeblock (402, 404, 406, 408, 410, 700, 1000) ferner eine Sequenznummer enthält, die eine Sequenzposition des Codeblocks (402, 404, 406, 408, 410, 700, 1000) innerhalb eines Superframes (2408, 2410, 2412, 2414) des gemultiplexten Datenstroms (300, 400, 1100) angibt.

16. Eine Vorrichtung nach Anspruch 13, wobei,
die erste Gruppe eine Anzahl von Codeblocks (402, 404, 406, 408, 410, 700, 1000) umfasst, die auf einer Anzahl von Bits des Sequenznummernindikators basiert, und
die Prozessorvorrichtung den ersten nachfolgenden Codeblock (402, 404, 406, 408, 410, 700, 1000) bestimmt, indem sie, basierend auf dem Sequenznummernindikator, zu einem ersten Codeblock (402, 404, 406, 408, 410, 700, 1000) einer zweiten Gruppe von Codeblöcken (402, 404, 406, 408, 410, 700, 1000) springt, wobei die zweite Gruppe eine Anzahl von Codeblöcken (402, 404, 406, 408, 410, 700, 1000) umfasst, die gleich der Anzahl von Codeblöcken (402, 404, 406, 408, 410, 700, 1000) der ersten Gruppe ist.

17. Eine Vorrichtung nach Anspruch 16, wobei als Reaktion auf die Bestimmung, dass der erste nachfolgende Codeblock (402, 404, 406, 408, 410, 700, 1000) den Zeitplan (1200) nicht enthält, die Prozessorvorrichtung ferner dazu eingerichtet ist:
einen zweiten nachfolgenden Codeblock (402, 404, 406, 408, 410, 700, 1000) der Vielzahl von Codeblöcken (402, 404, 406, 408, 410, 700, 1000) zu bestimmen, wobei die Prozessorvorrichtung den zweiten nachfolgenden Codeblock (402, 404, 406, 408, 410, 700, 1000) bestimmt, indem sie, basierend auf der Anzahl von Codeblöcken (402, 404, 406, 408, 410, 700, 1000) der zweiten Gruppe, zu einem ersten Codeblock (402, 404, 406, 408, 410, 700, 1000) einer dritten Gruppe von Codeblöcken (402, 404, 406, 408, 410, 700, 1000) springt;
den zweiten nachfolgenden Codeblock (402, 404, 406, 408, 410, 700, 1000) zu dekodieren;
zu bestimmen, ob das Flag des zweiten nachfolgenden Codeblocks (402, 404, 406, 408, 410, 700, 1000) anzeigt, dass der zweite nachfolgende Codeblock (402, 404, 406, 408, 410, 700, 1000) den Zeitplan (1200) enthält; und
den Zeitplan (1200) aus dem zweiten nachfolgenden Codeblock (402, 404, 406, 408, 410, 700, 1000) zu erfassen, wenn festgestellt wird, dass der zweite nachfolgende Codeblock (402, 404, 406, 408, 410, 700, 1000) den Zeitplan (1200) enthält.

18. Eine Vorrichtung nach einem der Ansprüche 13 bis 17, wobei jeder Codeblock (402, 404, 406, 408, 410, 700, 1000) mit einer Sequenznummer verknüpft ist, die eine Sequenzposition des Codeblocks (402, 404, 406, 408, 410, 700, 1000) innerhalb eines Superframes (2408, 2410, 2412, 2414) des gemultiplexten Datenstroms (300, 400, 1100) angibt, und wobei das Flag ferner anzeigt, ob die Sequenznummer des einen Codeblocks (402, 404, 406, 408, 410, 700, 1000) bedeutet, dass der eine Codeblock (402, 404, 406, 408, 410, 700, 1000) eine erste Position innerhalb des Superframes (2408, 2410, 2412, 2414) einnimmt, und wobei die Prozessorvorrichtung ferner dazu eingerichtet ist:
einen Zähler zum Verfolgen der Sequenznummer jeder der Codeblöcke (402, 404, 406, 408, 410, 700, 1000) in Reaktion auf eine Bestimmung, dass der eine Codeblock (402, 404, 406, 408, 410, 700, 1000) den Zeitplan (1200) enthält, zurückzusetzen.

19. Eine Vorrichtung nach einem der Ansprüche 13 bis 18, wobei,
die Codeblöcke (402, 404, 406, 408, 410, 700, 1000) innerhalb eines oder mehrerer Superframes (2408, 2410, 2412, 2414) innerhalb des Datenstroms (300, 400, 1100) organisiert sind,
jeder Codeblock (402, 404, 406, 408, 410, 700, 1000) eine Sequenznummer hat, die eine Position des Codeblocks (402, 404, 406, 408, 410, 700, 1000) innerhalb eines jeweiligen Superframes (2408, 2410, 2412, 2414) anzeigt, und wobei der Zeitplan (1200) die Sequenznummer jedes Codeblocks (402, 404, 406, 408, 410, 700, 1000) und einen jeweiligen Klassenindikator angibt, der eine Kommunikationsgeräteklasse angibt, die für die Dekodierung des jeweiligen Codeblocks (402, 404, 406, 408, 410, 700, 1000) vorgesehen ist.

20. Eine Vorrichtung nach Anspruch 19, wobei der Zeitplan (1200) in mindestens einem Codeblock (402, 404, 406, 408, 410, 700, 1000) in jedem Superframe (2408, 2410, 2412, 2414) übertragen wird.

21. Eine Vorrichtung nach Anspruch 19, bei dem der Zeitplan (1200) in einem Codeblock (402, 404, 406, 408, 410, 700, 1000) innerhalb jedes Superframes (2408, 2410, 2412, 2414) übertragen wird, und der Codeblock (402, 404, 406, 408, 410, 700, 1000), der den Zeitplan (1200) enthält, die gleiche Sequenznummer jedes Superframes (2408, 2410, 2412, 2414) aufweist.

22. Eine Vorrichtung nach einem der Ansprüche 13 bis 21, wobei der Zeitplan (1200) periodisch innerhalb der Codeblöcke (402, 404, 406, 408, 410, 700, 1000) des gemultiplexten Datenstroms (300, 400, 1100) übertragen wird.

23. Eine Vorrichtung nach einem der Ansprüche 13 bis 22, wobei das Flag in einem Header eines jeden Codeblocks (402, 404, 406, 408, 410, 700, 1000) enthalten ist.

24. Eine Vorrichtung nach einem der Ansprüche 13 bis 23, wobei die Codeblöcke (402, 404, 406, 408, 410, 700, 1000) in Übereinstimmung mit einem DVB-S2-Protokoll formatiert sind und das Flag in einem Basisband-Header jedes Codeblocks (402, 404, 406, 408, 410, 700, 1000) enthalten ist.

25. Digitales Speichermedium mit aus dem digitalen Speichermedium elektronisch auslesbaren Steuersignalen, die mit einem programmierbaren Computer oder digitalen Signalprozessor so zusammenwirken, dass alle Schritte des Verfahrens nach einem der Ansprüche 1 bis 12 durchgeführt werden.

26. Computerprogramm mit Programmcode-Mitteln, das so konfiguriert ist, dass es alle Schritte einer der Ansprüche 1 bis 12 ausführt, wenn das Programm auf einem programmierbaren Computer oder einem digitalen Signalprozessor ausgeführt wird.

## Revendications

1. Procédé, comprenant :
le décodage, par un dispositif de traitement, d'un bloc de code (402, 404, 406, 408, 410, 700, 1000) d'une pluralité de blocs de code (402, 404, 406, 408, 410, 700, 1000) à l'intérieur d'un flux de données (300, 400, 1100) multiplexé, dans lequel chaque bloc de code (402, 404, 406, 408, 410, 700, 1000) inclut un fanion qui indique si le bloc de code (402, 404, 406, 408, 410, 700, 1000) contient un plan de temps (1200), et le plan de temps (1200) désigne une structure de multiplexage du flux de données (300, 400, 1100) ;
le fait de déterminer si le fanion du bloc de code (402, 404, 406, 408, 410, 700, 1000) indique que le bloc de code (402, 404, 406, 408, 410, 700, 1000) contient le plan de temps (1200) ; et
s'il est déterminé que le bloc de code (402, 404, 406, 408, 410, 700, 1000) contient le plan de temps (1200), le procédé comprend en outre l'acquisition du plan de temps (1200) ;
en réponse au fait de déterminer que le bloc de code (402, 404, 406, 408, 410, 700, 1000) ne contient pas le plan de temps (1200), la détermination d'un premier bloc de code suivant (402, 404, 406, 408, 410, 700, 1000) de la pluralité de blocs de code (402, 404, 406, 408, 410, 700, 1000) ;
le décodage, par le dispositif de traitement, du premier bloc de code suivant (402, 404, 406, 408, 410, 700, 1000) ; et
le fait de déterminer si le fanion du premier bloc de code suivant (402, 404, 406, 408, 410, 700, 1000) indique que le premier bloc de code suivant (402, 404, 406, 408, 410, 700, 1000) contient le plan de temps (1200) ; et
s'il est déterminé que le premier bloc de code suivant (402, 404, 406, 408, 410, 700, 1000) contient le plan de temps (1200), le procédé comprend en outre l'acquisition du plan de temps (1200), dans lequel chaque bloc de code (402, 404, 406, 408, 410, 700, 1000) inclut en outre un indicateur de numéro de séquence qui indique une position de séquence du bloc de code (402, 404, 406, 408, 410, 700, 1000) à l'intérieur d'un premier groupe de la pluralité de blocs de code (402, 404, 406, 408, 410, 700, 1000),
**caractérisé en ce que**
la détermination du premier bloc de code suivant (402, 404, 406, 408, 410, 700, 1000) est basée sur une vitesse de décodage du dispositif de traitement et sur l'indicateur de numéro de séquence.

2. Procédé selon la revendication 1, dans lequel chaque bloc de code (402, 404, 406, 408, 410, 700, 1000) inclut en outre un indicateur de classe indiquant une classe de dispositif de communication qui est conçue pour décoder le bloc de code (402, 404, 406, 408, 410, 700, 1000).

3. Procédé selon la revendication 2, dans lequel chaque bloc de code (402, 404, 406, 408, 410, 700, 1000) inclut en outre un numéro de séquence spécifiant une position de séquence du bloc de code (402, 404, 406, 408, 410, 700, 1000) à l'intérieur d'une supertrame (2408, 2410, 2412, 2414) du flux de données (300, 400, 1100) multiplexé.

4. Procédé selon l'une quelconque des revendications 1 à 3, dans lequel,
le premier groupe comprend un certain nombre de blocs de code (402, 404, 406, 408, 410, 700, 1000) basé sur un nombre de bits de l'indicateur de numéro de séquence, et
la détermination du premier bloc de code suivant (402, 404, 406, 408, 410, 700, 1000) comprend le fait de sauter, sur la base de l'indicateur de numéro de séquence, jusqu'à un premier bloc de code (402, 404, 406, 408, 410, 700, 1000) d'un deuxième groupe de blocs de code (402, 404, 406, 408, 410, 700, 1000), dans lequel le deuxième groupe comprend un certain nombre de blocs de code (402, 404, 406, 408, 410, 700, 1000) égal au nombre de blocs de code (402, 404, 406, 408, 410, 700, 1000) du premier groupe.

5. Procédé selon la revendication 4, comprenant en outre :
en réponse au fait de déterminer que le premier bloc de code suivant (402, 404, 406, 408, 410, 700, 1000) ne contient pas le plan de temps (1200), la détermination d'un second bloc de code suivant (402, 404, 406, 408, 410, 700, 1000) de la pluralité de blocs de code (402, 404, 406, 408, 410, 700, 1000), dans lequel la détermination du second bloc de code suivant (402, 404, 406, 408, 410, 700, 1000) comprend le fait de sauter, sur la base du nombre de blocs de code (402, 404, 406, 408, 410, 700, 1000) du deuxième groupe, jusqu'à un premier bloc de code (402, 404, 406, 408, 410, 700, 1000) d'un troisième groupe de blocs de code (402, 404, 406, 408, 410, 700, 1000) ;
le décodage, par le dispositif de traitement, du second bloc de code suivant (402, 404, 406, 408, 410, 700, 1000); et
le fait de déterminer si le fanion du second bloc de code suivant (402, 404, 406, 408, 410, 700, 1000) indique que le second bloc de code suivant (402, 404, 406, 408, 410, 700, 1000) contient le plan de temps (1200) ; et
s'il est déterminé que le second bloc de code suivant (402, 404, 406, 408, 410, 700, 1000) contient le plan de temps (1200), le procédé comprend en outre l'acquisition du plan de temps (1200).

6. Procédé selon l'une quelconque des revendications 1 à 5, dans lequel chaque bloc de code (402, 404, 406, 408, 410, 700, 1000) est associé à un numéro de séquence désignant une position de séquence du bloc de code (402, 404, 406, 408, 410, 700, 1000) à l'intérieur d'une supertrame (2408, 2410, 2412, 2414) du flux de données (300, 400, 1100) multiplexé, et le fanion indique en outre si le numéro de séquence du bloc de code (402, 404, 406, 408, 410, 700, 1000) signifie que le bloc de code (402, 404, 406, 408, 410, 700, 1000) relève d'une première position à l'intérieur de la supertrame (2408, 2410, 2412, 2414), et dans lequel le procédé comprend en outre :
la réinitialisation d'un compteur pour tracer le numéro de séquence de chacun des blocs de code (402, 404, 406, 408, 410, 700, 1000) en réponse au fait de déterminer que le bloc de code (402, 404, 406, 408, 410, 700, 1000) contient le plan de temps (1200).

7. Procédé selon l'une quelconque des revendications 1 à 6, dans lequel,
les blocs de code (402, 404, 406, 408, 410, 700, 1000) sont organisés à l'intérieur d'une ou plusieurs supertrames (2408, 2410, 2412, 2414) à l'intérieur du flux de données (300, 400, 1100),
chaque bloc de code (402, 404, 406, 408, 410, 700, 1000) relève d'un numéro de séquence indiquant une position du bloc de code (402, 404, 406, 408, 410, 700, 1000) à l'intérieur d'une supertrame (2408, 2410, 2412, 2414) respective, et
le plan de temps (1200) désigne le numéro de séquence de chaque bloc de code (402, 404, 406, 408, 410, 700, 1000) et un indicateur de classe respectif indiquant une classe de dispositif de communication qui est conçue pour décoder le bloc de code (402, 404, 406, 408, 410, 700, 1000) respectif.

8. Procédé selon la revendication 7, dans lequel le plan de temps (1200) est transmis dans au moins un bloc de code (402, 404, 406, 408, 410, 700, 1000) à l'intérieur de chaque supertrame (2408, 2410, 2412, 2414).

9. Procédé selon la revendication 7, dans lequel le plan de temps (1200) est transmis dans un bloc de code (402, 404, 406, 408, 410, 700, 1000) à l'intérieur de chaque supertrame (2408, 2410, 2412, 2414), et le bloc de code (402, 404, 406, 408, 410, 700, 1000) contenant le plan de temps (1200) relève d'un même numéro de séquence de chaque supertrame (2408, 2410, 2412, 2414).

10. Procédé selon l'une quelconque des revendications 1 à 9, dans lequel le plan de temps (1200) est transmis périodiquement à l'intérieur des blocs de code (402, 404, 406, 408, 410, 700, 1000) du flux de données (300, 400, 1100) multiplexé.

11. Procédé selon l'une quelconque des revendications 1 à 10, dans lequel le fanion est contenu à l'intérieur d'un en-tête de chaque bloc de code (402, 404, 406, 408, 410, 700, 1000).

12. Procédé selon l'une quelconque des revendications 1 à 11, dans lequel les blocs de code (402, 404, 406, 408, 410, 700, 1000) sont formatés selon un protocole DVB-S2, et le fanion est contenu à l'intérieur d'un en-tête de bande de base de chaque bloc de code (402, 404, 406, 408, 410, 700, 1000).

13. Appareil, comprenant :
un module récepteur (500, 600, 900) configuré pour recevoir un flux de données (300, 400, 1100) multiplexé comprenant une pluralité de blocs de code (402, 404, 406, 408, 410, 700, 1000) ; et
un dispositif de traitement configuré pour,
décoder un bloc de code (402, 404, 406, 408, 410, 700, 1000) de la pluralité de blocs de code (402, 404, 406, 408, 410, 700, 1000), dans lequel chaque bloc de code (402, 404, 406, 408, 410, 700, 1000) inclut un fanion qui indique si le bloc de code (402, 404, 406, 408, 410, 700, 1000) contient un plan de temps (1200), et le plan de temps (1200) désigne une structure de multiplexage du flux de données (300, 400, 1100),
déterminer si le fanion du bloc de code (402, 404, 406, 408, 410, 700, 1000) indique que le bloc de code (402, 404, 406, 408, 410, 700, 1000) contient le plan de temps (1200), et
acquérir le plan de temps (1200) depuis le bloc de code (402, 404, 406, 408, 410, 700, 1000) s'il est déterminé que le bloc de code (402, 404, 406, 408, 410, 700, 1000) contient le plan de temps (1200), dans lequel, en réponse au fait de déterminer que le bloc de code (402, 404, 406, 408, 410, 700, 1000) ne contient pas le plan de temps (1200), le dispositif de traitement est en outre configuré pour :
déterminer un premier bloc de code suivant (402, 404, 406, 408, 410, 700, 1000) de la pluralité de blocs de code (402, 404, 406, 408, 410, 700, 1000) ;
décoder le premier bloc de code suivant (402, 404, 406, 408, 410, 700, 1000) ;
déterminer si le fanion du premier bloc de code suivant (402, 404, 406, 408, 410, 700, 1000) indique que le premier bloc de code suivant (402, 404, 406, 408, 410, 700, 1000) contient le plan de temps (1200) ; et
acquérir le plan de temps (1200) depuis le premier bloc de code suivant (402, 404, 406, 408, 410, 700, 1000) s'il est déterminé que le premier bloc de code suivant (402, 404, 406, 408, 410, 700, 1000) contient le plan de temps (1200), dans lequel chaque bloc de code (402, 404, 406, 408, 410, 700, 1000) inclut en outre un indicateur de numéro de séquence qui indique une position de séquence du bloc de code (402, 404, 406, 408, 410, 700, 1000) à l'intérieur d'un premier groupe de la pluralité de blocs de code (402, 404, 406, 408, 410, 700, 1000),
**caractérisé en ce que**
le dispositif de traitement détermine le premier bloc de code suivant (402, 404, 406, 408, 410, 700, 1000) sur la base d'une vitesse de décodage du dispositif de traitement et de l'indicateur de numéro de séquence.

14. Appareil selon la revendication 13, dans lequel chaque bloc de code (402, 404, 406, 408, 410, 700, 1000) inclut en outre un indicateur de classe indiquant une classe de dispositif de communication qui est conçue pour décoder le bloc de code (402, 404, 406, 408, 410, 700, 1000).

15. Appareil selon la revendication 14, dans lequel chaque bloc de code (402, 404, 406, 408, 410, 700, 1000) inclut en outre un numéro de séquence spécifiant une position de séquence du bloc de code (402, 404, 406, 408, 410, 700, 1000) à l'intérieur d'une supertrame (2408, 2410, 2412, 2414) du flux de données (300, 400, 1100) multiplexé.

16. Appareil selon la revendication 13, dans lequel,
le premier groupe comprend un certain nombre de blocs de code (402, 404, 406, 408, 410, 700, 1000) basé sur un nombre de bits de l'indicateur de numéro de séquence, et
le dispositif de traitement détermine le premier bloc de code suivant (402, 404, 406, 408, 410, 700, 1000) en sautant, sur la base de l'indicateur de numéro de séquence, jusqu'à un premier bloc de code (402, 404, 406, 408, 410, 700, 1000) d'un deuxième groupe de blocs de code (402, 404, 406, 408, 410, 700, 1000), dans lequel le deuxième groupe comprend un certain nombre de blocs de code (402, 404, 406, 408, 410, 700, 1000) égal au nombre de blocs de code (402, 404, 406, 408, 410, 700, 1000) du premier groupe.

17. Appareil selon la revendication 16, dans lequel, en réponse au fait de déterminer que le premier bloc de code suivant (402, 404, 406, 408, 410, 700, 1000) ne contient pas le plan de temps (1200), le dispositif de traitement est en outre configuré pour :
déterminer un second bloc de code suivant (402, 404, 406, 408, 410, 700, 1000) de la pluralité de blocs de code (402, 404, 406, 408, 410, 700, 1000), dans lequel le dispositif de traitement détermine le second bloc de code suivant (402, 404, 406, 408, 410, 700, 1000) en sautant, sur la base du nombre de blocs de code (402, 404, 406, 408, 410, 700, 1000) du deuxième groupe, jusqu'à un premier bloc de code (402, 404, 406, 408, 410, 700, 1000) d'un troisième groupe de blocs de code (402, 404, 406, 408, 410, 700, 1000) ;
décoder le second bloc de code suivant (402, 404, 406, 408, 410, 700, 1000) ;
déterminer si le fanion du second bloc de code suivant (402, 404, 406, 408, 410, 700, 1000) indique que le second bloc de code suivant (402, 404, 406, 408, 410, 700, 1000) contient le plan de temps (1200) ; et
acquérir le plan de temps (1200) depuis le second bloc de code suivant (402, 404, 406, 408, 410, 700, 1000) s'il est déterminé que le second bloc de code suivant (402, 404, 406, 408, 410, 700, 1000) contient le plan de temps (1200).

18. Appareil selon l'une quelconque des revendications 13 à 17, dans lequel chaque bloc de code (402, 404, 406, 408, 410, 700, 1000) est associé à un numéro de séquence désignant une position de séquence du bloc de code (402, 404, 406, 408, 410, 700, 1000) à l'intérieur d'une supertrame (2408, 2410, 2412, 2414) du flux de données (300, 400, 1100) multiplexé, et le fanion indique en outre si le numéro de séquence du bloc de code (402, 404, 406, 408, 410, 700, 1000) signifie que le bloc de code (402, 404, 406, 408, 410, 700, 1000) relève d'une première position à l'intérieur de la supertrame (2408, 2410, 2412, 2414), et dans lequel le dispositif de traitement est en outre configuré pour :
réinitialiser un compteur pour tracer le numéro de séquence de chacun des blocs de code (402, 404, 406, 408, 410, 700, 1000) en réponse au fait de déterminer que le bloc de code (402, 404, 406, 408, 410, 700, 1000) contient le plan de temps (1200).

19. Appareil selon l'une quelconque des revendications 13 à 18, dans lequel,
les blocs de code (402, 404, 406, 408, 410, 700, 1000) sont organisés à l'intérieur d'une ou plusieurs supertrames (2408, 2410, 2412, 2414) à l'intérieur du flux de données (300, 400, 1100),
chaque bloc de code (402, 404, 406, 408, 410, 700, 1000) relève d'un numéro de séquence indiquant une position du bloc de code (402, 404, 406, 408, 410, 700, 1000) à l'intérieur d'une supertrame (2408, 2410, 2412, 2414) respective, et
le plan de temps (1200) désigne le numéro de séquence de chaque bloc de code (402, 404, 406, 408, 410, 700, 1000) et un indicateur de classe respectif indiquant une classe de dispositif de communication qui est conçue pour décoder le bloc de code (402, 404, 406, 408, 410, 700, 1000) respectif.

20. Appareil selon la revendication 19, dans lequel le plan de temps (1200) est transmis dans au moins un bloc de code (402, 404, 406, 408, 410, 700, 1000) à l'intérieur de chaque supertrame (2408, 2410, 2412, 2414).

21. Appareil selon la revendication 19, dans lequel le plan de temps (1200) est transmis dans un bloc de code (402, 404, 406, 408, 410, 700, 1000) à l'intérieur de chaque supertrame (2408, 2410, 2412, 2414), et le bloc de code (402, 404, 406, 408, 410, 700, 1000) contenant le plan de temps (1200) relève d'un même numéro de séquence de chaque supertrame (2408, 2410, 2412, 2414).

22. Appareil selon l'une quelconque des revendications 13 à 21, dans lequel le plan de temps (1200) est transmis périodiquement à l'intérieur des blocs de code (402, 404, 406, 408, 410, 700, 1000) du flux de données (300, 400, 1100) multiplexé.

23. Appareil selon l'une quelconque des revendications 13 à 22, dans lequel le fanion est contenu à l'intérieur d'un en-tête de chaque bloc de code (402, 404, 406, 408, 410, 700, 1000).

24. Appareil selon l'une quelconque des revendications 13 à 23, dans lequel les blocs de code (402, 404, 406, 408, 410, 700, 1000) sont formatés selon un protocole DVB-S2, et le fanion est contenu à l'intérieur d'un en-tête de bande de base de chaque bloc de code (402, 404, 406, 408, 410, 700, 1000).

25. Support d'enregistrement numérique avec des signaux de commande lisibles électroniquement depuis le support d'enregistrement numérique, qui interagissent avec un ordinateur programmable ou un processeur de signal numérique de manière à ce que toutes les étapes du procédé selon l'une quelconque des revendications 1 à 12 soient réalisées.

26. Programme informatique avec un moyen de code de programme configuré pour réaliser toutes les étapes selon l'une quelconque des revendications 1 à 12 lorsque le programme est réalisé sur un ordinateur programmable ou un processeur de signal numérique.
